# EUROPEAN PATENT SPECIFICATION

(11) **EP 2 929 728 B1**
(45) Date of publication and mention of the grant of the patent: **17.07.2019**
(21) Application number: 13789099.2
(22) Date of filing: 22.10.2013
(51) Int. Cl.: H04W 48/18

(54) **NETWORK DIRECTED SYSTEM SELECTION USING WIRELESS DEVICE INPUT**
NETZWERKORIENTIERTE SYSTEMAUSWAHL MIT DRAHTLOSVORRICHTUNGSEINGABE
CHOIX DE SYSTÈME DIRIGÉ VERS UN RÉSEAU À L'AIDE D'UNE ENTRÉE DE DISPOSITIF SANS FIL

(30) Priority: 22.10.2012 US 201261717050 P; 25.02.2013 US 201313776607
(43) Date of publication of application: 14.10.2015
(73) Proprietor: Qualcomm Incorporated, San Diego, CA 92121-1714 (US)
(72) Inventor: SUNDARARAJAN, Jay Kumar, San Diego, California 92121-1714 (US); ZHOU, Yan, San Diego, California 92121-1714 (US); MEYLAN, Arnaud, San Diego, California 92121-1714 (US); TINNAKORNSRISUPHAP, Peerapol, San Diego, California 92121-1714 (US)
(74) Representative: Klang, Alexander H.
(86) International application number: PCT/US2013/066199
(87) International publication number: WO 2014/066399

(56) References cited:
- EP-A1- 1 708 526
- WO-A1-2009/047389
- WO-A1-2011/100269
- US-B1- 7 737 896

## Description

### BACKGROUND

The following relates generally to wireless communication, and more specifically to network directed system selection for wireless devices. Wireless communications systems are widely deployed to provide various types of communication content such as voice, video, packet data, messaging, broadcast, and so on. These systems may be multiple-access systems capable of supporting communication with multiple users by sharing the available system resources (e.g., time, frequency, and power). Examples of such multiple-access systems include code-division multiple access (CDMA) systems, time-division multiple access (TDMA) systems, frequency-division multiple access (FDMA) systems, and orthogonal frequency-division multiple access (OFDMA) systems.

Network directed system selection is a network capability that provides a network based mechanism for automatically directing a wireless device to a desired network or wireless communication system. In certain examples, a network servicing multiple wireless devices may become congested, which may reduce the connection quality for each of the wireless devices. To address this congestion, the network may refuse service to a requesting wireless device or discontinue service for a currently served wireless device. However, such action may result in an unacceptable user experience on certain wireless devices. For example, some wireless devices may not have access to any alternative network. Other wireless devices may run network flows that will not work on other networks due to operator policy. In some cases, it may be more expensive or require more power for a wireless device to operate on an alternative network. Thus, a need exists in the art for network directed system selection for wireless devices that preserve quality of service and user experience on the wireless devices.

Attention is drawn to document EP 1 708 526 A1 which relates to a mobile station MS1 which can communicate through a PLMN 2 and also through a number of local wireless networks e.g. WLAN 6 and WiMAX'7. When the user of MS1 wishes to run an application, for example a video player application, a suitable one of the networks is selected for the communication by obtaining data from the candidate networks using SIP INVITE messages that produce responses containing network parameter data for each of the candidate networks. The handset MS1 may also monitor local network traffic to determine network congestion and also check past history to determine whether many handovers have been made during previous sessions. The data is collated and checked with a service provider so that a network selection decision can be made.

Further attention is drawn to document WO 2011/100269 A1 which relates to a method for selecting at a terminal at least one of a plurality of available access networks for use with a wireless application invoked at the terminal according preferences associated with the wireless application, the network service provider, the subscriber, the subscriber subscription and application content provider. The selection may be constrained by an Application Policy received from a network service provider.

Attention is also drawn to document US 7 737 896 A1 which relates to a method for the operation of a dual mode wireless communication device. In operation, the dual mode device scans for available voice or data networks upon identification of a trigger event, for example, a manual instruction, a drop in signal strength, a loss of signal, a time of usage on a particular network, a battery condition, an application preference, a state of the wireless communication device, or a geographic location.

Finally, attention is drawn to document WO 2009/047389 A1 which relates to a method in an open access environment. In the method, a connection is established between a service operator node and the user terminal, via a network operator node. The system is arranged to compare access parameters (such access-type-specific charging rates) advertised by available network operator nodes during the connection, and to select a network operator node for providing the user terminal with access to a corresponding access network. The system preliminarily evaluates the amount of data to be transferred and the period of time to be spent for the connection within the area of the network operator node. The network operator node is then selected on the basis of the comparison, the evaluated amount of data, and the evaluated period of time.

### SUMMARY

The invention is set out by the appended set of claims.

The present disclosure describes network directed system selection for a wireless device using input provided by the wireless device. The wireless device may identify and provide relevant system selection data to the network to help in the system selection decision. The wireless device may identify a trigger associated with system selection by a network device for the wireless device. The trigger may be received from the network or detected at the wireless device in response to one or more events. The wireless device may then identify system selection data at the wireless device for use by the network device in performing a network directed system selection decision for the wireless device, and transmit the system selection data to the network for use by the network device. System selection decisions may be made at the network device based on the system selection data received from the wireless device.

According to a first set of illustrative embodiments, a method of network directed system selection includes identifying, at a wireless device, a trigger associated with system selection by a network device for the wireless device; identifying system selection data at the wireless device for use by the network device in performing a network directed system selection decision for the wireless device, the system selection including an indication of one or more networks through which the wireless device has verified that data access is available to the wireless device; and transmitting the system selection data from the wireless device to a first network for use by the network device, the transmitting of the system selection data occurring in response to the identified trigger.

In certain examples, the system selection decision may include at least one of: an admission control decision or a decision whether to transition the wireless device from a first network to a second network. The wireless device may connect to a second system, while concurrently connected to the first network, and ping a network resource over the second network to verify that data access is available to the wireless device while the wireless device is concurrently connected to the first network. In additional or alternative examples, the wireless device may verify that the data access is available from the one or more networks based on a subscription associated with the wireless device. In certain examples, the data access may include application layer data access.

Additionally or alternatively, at least one identifier associated with the wireless device for each of a plurality of networks available to the wireless device may be transmitted to the first network, the system selection data including the at least one identifier. In additional or alternative examples, pricing information associated with transmitting data over at least one of the first network or a second network may be transmitted to the first network, the system selection data comprising the pricing information.

In some examples, information about an application currently running on the wireless device may be included in the system selection data and transmitted to the first network. This information may include, for example, an indication of at least one network data policy associated with the application, an indication of at least one type associated with the application, an indication of at least one Quality of Service (QoS) requirement associated with the application, or an indication of a tolerance of the application to Internet Protocol (IP) address changes.

In additional or alternative examples, an indication of a current level of activity of the wireless device may be transmitted to the first network as at least a portion of the system selection data. In some examples, an indication of power consumption associated with conducting data transactions over at least one network may be transmitted to the first network as at least a portion of the system selection data. Additionally or alternatively, an indication of a battery level of the wireless device may be transmitted to the first network as at least a portion of the system selection data.

In additional or alternative examples, a status of at least one transmit or receive buffer associated with the wireless device may be transmitted to the first network as at least a portion of the system selection data.

The wireless device may receive over the first network an instruction to disconnect from at least one network based on the system selection data. Additionally or alternatively, the wireless device may receive over the first network an instruction to connect to at least one network based on the transmitted system selection data. Additionally or alternatively, the wireless device may be connected to both networks, and the instruction may be to transition data transactions for the wireless device from the first network to the second network without disconnecting from the first network.

In certain examples, a request for the system selection data may be received at the wireless device over the first network as at least a portion of the aforementioned trigger. Additionally or alternatively, a change in the system selection data may be detected at the wireless device as at least a portion of the identified trigger.

According to a second set of illustrative embodiments, a wireless device apparatus may include means for identifying a trigger associated with system selection by a network device for the wireless device; means for identifying system selection data for use by the network device in determining whether to transition the wireless device apparatus from a first network to a second network, the system selection data including an indication of one or more networks through which the wireless device apparatus has verified that data access is available to the wireless device apparatus; and means for transmitting the system selection data from the wireless device apparatus to the network device in response to the identified trigger.

In certain examples, the system selection decision may include at least one of: an admission control decision or a decision whether to transition the wireless device from a first network to a second network. The wireless device apparatus may include means for connecting to a second system while the wireless device apparatus is concurrently connected to the first network, and means for pinging a network resource over the second network to verify that data access is available to the wireless device while the wireless device is concurrently connected to the first network. In additional or alternative examples, the wireless device may include means for verifying that the data access is available from the one or more networks based on a subscription associated with the wireless device. In certain examples, the data access may include application layer data access.

Additionally or alternatively, the wireless device apparatus may include means for transmitting to the first network at least one identifier associated with the wireless device for each of a plurality of networks available to the wireless, the system selection data including the at least one identifier. In additional or alternative examples, the wireless device apparatus may include means for transmitting to the first network pricing information associated with transmitting data over at least one of the first network or a second network, the system selection data comprising the pricing information.

In some examples, information about an application currently running on the wireless device may be included in the system selection data, and the wireless device apparatus may include means for transmitting the information about the application to the first network. This information may include, for example, an indication of at least one network data policy associated with the application, an indication of at least one type associated with the application, an indication of at least one Quality of Service (QoS) requirement associated with the application, or an indication of a tolerance of the application to Internet Protocol (IP) address changes.

In additional or alternative examples, the wireless device apparatus may include means for transmitting an indication of a current level of activity of the wireless device to the first network as at least a portion of the system selection data. In some examples, the wireless device apparatus may include means for transmitting to the first network an indication of power consumption associated with conducting data transactions over at least one network as at least a portion of the system selection data. Additionally or alternatively, the wireless device apparatus may include means for transmitting an indication of a battery level of the wireless device to the first network as at least a portion of the system selection data.

In additional or alternative examples, the wireless device apparatus may include means for transmitting a status of at least one transmit or receive buffer associated with the wireless device to the first network as at least a portion of the system selection data.

The wireless device apparatus may further include means for receiving a request for the system selection data as at least a portion of the aforementioned trigger. Additionally or alternatively, the wireless device apparatus may include means for detecting a change in the system selection data as at least a portion of the identified trigger.

According to a third set of illustrative embodiments, a wireless device apparatus may include at least one processor communicatively coupled with a memory, the memory comprising executable code that, when executed by the at least one processor, causes the at least one processor to: identify a trigger associated with system selection by a network device for the wireless device apparatus; identify system selection data at the wireless device apparatus for use by the network device in performing a system selection decision for the wireless device apparatus, the system selection data comprising an indication of one or more networks through which the wireless device apparatus has verified that data access is available to the wireless device apparatus; and transmit the system selection data from the wireless device apparatus to the network for use by the network device, the transmitting of the system selection data occurring in response to the identified trigger. The wireless device apparatus may perform some or all of the functionality described above with respect to the first and second illustrative embodiments.

According to a fourth set of illustrative embodiments, a computer program product may include a computer-readable storage device, the computer readable storage device having computer-readable program code stored thereon. The computer-readable program code may include: computer-readable program code configured to identify a trigger associated with system selection by a network device for the wireless device apparatus; computer-readable program code configured to identify system selection data at the wireless device apparatus for use by the network device in performing a system selection decision for the wireless device apparatus, the system selection data including an indication of one or more networks through which the wireless device apparatus has verified that data access is available to the wireless device apparatus; and computer-readable program code configured to transmit the system selection data from the wireless device apparatus to the network for use by the network device, the transmitting of the system selection data occurring in response to the identified trigger. The computer program product may perform some or all of the functionality described above with respect to the first and second illustrative embodiments.

According to a fifth set of illustrative embodiments, a method of network directed system selection may include receiving, at a network device over a first network, system selection data generated by and transmitted from a wireless device, the system selection data including an indication of one or more networks through which the wireless device has verified that data access is available to the wireless device; and performing a system selection decision for the wireless device at the network device based on the received system selection data.

In certain examples, the system selection decision may include at least one of an admission control decision, a decision whether to transition the wireless device from a first network to a second network, or a decision to move traffic of the wireless device from a first network to a second network while the network device remains connected to both the first and second networks. In some examples, at least one identifier associated with the wireless device for each of a plurality networks available to the wireless device may be received over the first network, where the at least one identifier is at least a portion of the system selection data. Additionally or alternatively, pricing information associated with transmitting data over at least one of the first network or a second network be received over the first network, where the pricing information is at least a portion of the system selection data.

In further examples, information about an application currently running on the wireless device be received over the first network, where the received information is at least a portion of the system selection data. This information may include, for example, an indication of at least one network data policy associated with the application, an indication of at least one type associated with the application, an indication of at least one Quality of Service (QoS) requirement associated with the application, and/or an indication of a tolerance of the application to Internet Protocol (IP) address changes

In certain examples, an indication of power consumption associated with conducting data transactions over at least one of the first network or a second network may be received over the first network, where the indication of power consumption is at least a portion of the system selection data. Additionally or alternatively, an indication of a battery level at the wireless device may be received over the first network, where the indication of the battery level at the wireless device is at least a portion of the system selection data.

In certain examples, a status of a transmit or receive buffer associated with the wireless device may be received over the first network, where the status of the buffer is at least a portion of the system selection data.

In certain examples, an instruction may be transmitted to the wireless device to disconnect from at least one network based on the transmitted system selection data. Additionally or alternatively, an instruction may be transmitted to the wireless device to connect to at least one network based on the transmitted system selection data. Additionally or alternatively, the wireless device may be connected to both networks, and the instruction may be to transition data transactions for the wireless device from the first network to the second network without disconnecting from the first network. In further examples, a request for the system selection data may be transmitted to the network device. The request may be transmitted to the network device over the first network in response to a determination that a level of congestion associated with the first network has exceeded a predetermined threshold.

According to a sixth set of illustrative embodiments, a network device apparatus may include means for receiving, over a first network, system selection data generated by and transmitted from a wireless device, the system selection data including an indication of one or more networks through which the wireless device has verified that data access is available to the wireless device; and means for performing a system selection decision for the wireless device at the network device based on the received system selection data.

In certain examples, the system selection decision may include at least one of an admission control decision, a decision whether to transition the wireless device from a first network to a second network, or a decision to move traffic of the wireless device from a first network to a second network while the network device remains connected to both the first and second networks. In some examples, the network device apparatus may include means for receiving at least one identifier associated with the wireless device for each of a plurality networks available to the wireless device may be received over the first network, where the at least one identifier is at least a portion of the system selection data. Additionally or alternatively, the network device apparatus may include means for receiving, over the first network, pricing information associated with transmitting data over at least one of the first network or a second network, where the pricing information is at least a portion of the system selection data.

In further examples, the network device apparatus may include means for receiving, over the first network, information about an application currently running on the wireless device, where the received information is at least a portion of the system selection data. This information may include, for example, an indication of at least one network data policy associated with the application, an indication of at least one type associated with the application, an indication of at least one Quality of Service (QoS) requirement associated with the application, and/or an indication of a tolerance of the application to Internet Protocol (IP) address changes

In certain examples, the network device apparatus may include means for receiving, over the first network, an indication of power consumption associated with conducting data transactions over at least one of the first network or a second network, where the indication of power consumption is at least a portion of the system selection data. Additionally or alternatively, the network device apparatus may include means for receiving, over the first network, an indication of a battery level at the wireless device, where the indication of the battery level at the wireless device is at least a portion of the system selection data.

In certain examples, the network device apparatus may include means for receiving, over the first network, a status of a transmit or receive buffer associated with the wireless device, where the status of the buffer is at least a portion of the system selection data.

In certain examples, the network device apparatus may include means for transmitting, over the first network, an instruction to the wireless device to disconnect from at least one network based on the transmitted system selection data. Additionally or alternatively, the network device apparatus may include means for transmitting, over the first network, an instruction to the wireless device to connect to at least one network based on the transmitted system selection data. Additionally or alternatively, the wireless device may be connected to both networks, and the network device apparatus may include means for transmitting, over the first network, an instruction to transition data transactions for the wireless device from the first network to the second network without disconnecting from the first network. In further examples, the network device apparatus may include means for transmitting a request for the system selection data to the network device. The request may be transmitted to the network device over the first network in response to a determination that a level of congestion associated with the first network has exceeded a predetermined threshold.

According to a seventh set of illustrative embodiments, a network device apparatus may include at least one processor communicatively coupled with a memory. The memory may include executable code that, when executed by the at least one processor, causes the at least one processor to: receive, over a first network, system selection data generated by and transmitted from a wireless device, the system selection data including an indication of one or more networks through which the wireless device has verified that data access is available to the wireless device; and perform system selection decision for the wireless device at the network device based on the received system selection data. The network device apparatus may perform some or all of the functionality described above with respect to the fifth and sixth illustrative embodiments.

According to an eight set of illustrative, a computer program product may include a computer-readable storage device having computer-readable program code stored thereon. The computer-readable program code may include: computer-readable program code configured to receive, over a first network, system selection data generated by and transmitted from a wireless device, the system selection data including an indication of one or more networks through which the wireless device has verified that data access is available to the wireless device; and computer-readable program code configured to perform system selection decision for the wireless device at the network device based on the received system selection data. The computer program product may perform some or all of the functionality described above with respect to the fifth and sixth illustrative embodiments.

### BRIEF DESCRIPTION OF THE DRAWINGS

A further understanding of the nature and advantages of the present invention may be realized by reference to the following drawings. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 shows a block diagram of a wireless communications system;
FIG. 2 shows a block diagram of a wireless communications system;
FIG. 3 shows a block diagram of a wireless communications system;
FIG. 4A and FIG. 4B show a block diagram of an illustrative system selection process;
FIG. 5 shows a block diagram of an illustrative wireless device;
FIG. 6 shows a block diagram of an illustrative network device;
FIG. 7 shows a flowchart of an illustrative method of system selection;
FIG. 8 shows a flowchart of an illustrative method of system selection;
FIG. 9 shows a flowchart of an illustrative method of system selection;
FIG. 10 shows a flowchart of an illustrative method of system selection;
FIG. 11 shows a flowchart of an illustrative method of system selection;
FIG. 12 shows a flowchart of an illustrative method of system selection; and
FIG. 13 shows a flowchart of an illustrative method of system selection.

### DETAILED DESCRIPTION

The present disclosure describes network directed system selection for a wireless device using input provided by the wireless device. In certain examples, the wireless device may identify and provide relevant system selection data to the network to help in the system selection decision. In one example, a wireless device may identify a trigger associated with system selection by a network device for the wireless device. The trigger may be received from the network or detected at the wireless device in response to one or more events. The wireless device may then identify system selection data at the wireless device for use by the network device in performing a network directed system selection decision for the wireless device, and transmit the system selection data to the network for use by the network device. The system selection data may be transmitted in response to the identified trigger.

As used in the present disclosure, the term "system selection" or "network assisted system selection" refers to a process by which a network determines whether to refuse service to a requesting wireless device, discontinue service to a wireless device currently served by the network, or transition certain data transactions of a wireless device from a first network to a second network. In certain examples, system selection may include instructing a wireless device to transition from a first network to a second network. Alternatively, system selection may include transitioning data transactions of the wireless device from the first network to the second network while the wireless device remains connected to both the first and second networks. In certain examples, the first network may use a first radio access technology (RAT), and the second network may use a second RAT.

The following description provides examples. Changes may be made in the function and arrangement of elements discussed. Various embodiments may omit, substitute, or add various procedures or components as appropriate. For instance, the methods described may be performed in an order different from that described, and various steps may be added, omitted, or combined. Also, features described with respect to certain embodiments may be combined in other embodiments.

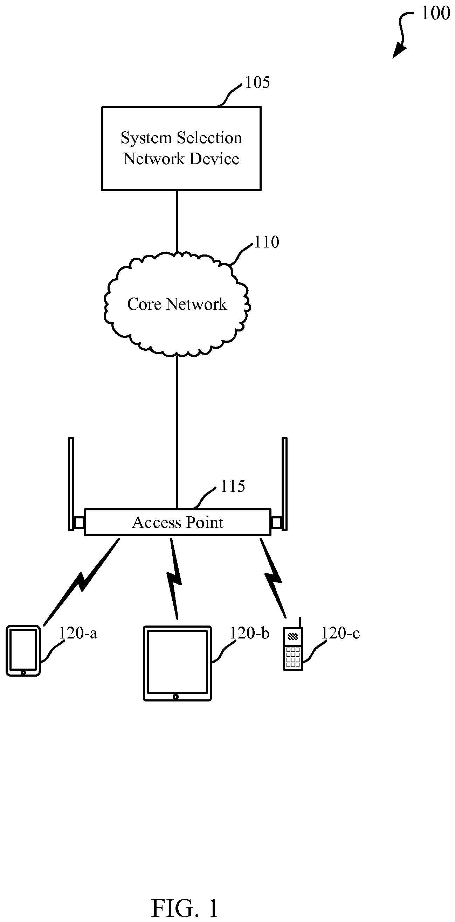

Referring first to **FIG. 1****,** a block diagram illustrates an example of a wireless communications system 100. The system 100 may include a system selection network device 105, a core network 110, an access point 115, and a number of terminal wireless devices 120. In certain examples, the functionality of the system selection network device 105 may be integrated into the access point 115 such that the same device or system functions as both the system selection network device 105 and the access point 115. Alternatively, the system selection network device 105 may be separate from the access point 115 and communicate with the access point 115 over the core network 110 or through another type of connection.

The access point 115 may communicate wirelessly with wireless devices 120 to provide the wireless devices 120 access to the core network 110. In certain examples, the access point 115 may be a WLAN access point, a femtocell, a microcell, a macrocell, or another type of access point. The wireless devices 120 may be referred to as mobile stations, mobile devices, access terminals (ATs), user equipments (UEs), subscriber stations (SSs), or subscriber units. The wireless devices 120 may include cellular phones and wireless communications devices, but may also include personal digital assistants (PDAs), other handheld devices, tablets, netbooks, notebook computers, etc.

The system selection network device 105 may be configured to perform network directed system selection for the wireless devices 120. In certain examples, the system selection network device 105 may perform system selection for one or more of the wireless devices 120 in response to determining that the wireless network implemented by the access point 115 is experiencing heavy congestion or a decline in quality of service. Additionally or alternatively, the system selection network device 105 may perform system selection for a wireless device 120 at the initiative of that wireless device 120.

Each of the wireless devices 120 may be configured to identify system selection data for use by the system selection network device 105 and transmit the system selection data to the network for use by the system selection network device 105 in performing a network directed system selection decision for that wireless device 120. The system selection decision may include an admission control decision or a decision of whether to transition the wireless device 120 from the wireless network implemented by the access point 115 to an alternative network. Thus, if the wireless device 120 is not a subscriber to the wireless network implemented by the access point 115, the system selection decision may include a decision of whether to permit or refuse a request by the wireless device 120 for network service from the access point 115. If the wireless device 120 is currently a subscriber to the wireless network, the system selection decision may include a decision of whether to maintain service for that wireless device 120 at the access point 115 or transition the wireless device 120 to a different network.

The system selection data transmitted by a wireless device 120 to the wireless network implemented by the access point 115 may be relevant to the system selection decision performed by the system selection network device 105. Thus, the system selection network device 105-c may perform system selection for the wireless device 120 based at least in part on the system selection data received from the wireless device 120.

In certain examples, the system selection data may include device capabilities and alternative network information for the wireless device 120. For example, the system selection data may include an indication of whether at least one alternative network is available to the wireless device 120. The system selection data may indicate networks to which the wireless device 120 is connected, networks for which the device has wireless coverage, or networks to which the wireless device 120 has a subscription as available to the wireless device 120.

In certain examples, the system selection data may include the identity of one or more alternative networks for which the wireless device 120 has verified that data access is available to the wireless device 120. For example, the wireless device 120 may temporarily connect to one or more of the alternative networks and perform a ping or other network operation to determine whether the wireless device 120 has access to application layer data through the alternative networks. In additional or alternative examples, the wireless device 120 may determine whether data access is available to the wireless device 120 through an alternative network based on the identity of the alternative network and a subscription associated with the wireless device. In still other examples, the wireless device 120 may use signaling to query one or more of the alternative networks whether data access is available to the wireless device 120 through that alternative network without establishing a full connection to the alternative network.

In certain examples, the system selection data may indicate at least one or more of: whether the wireless device 120 has cellular data connectivity enabled, whether the wireless device 120 has access to a femtocell network, a list of all Wi-Fi network subscriptions associated with the wireless device 120, and/or a list of all cellular network subscriptions associated with the wireless device 120. The system selection data may further indicate an identity associated with the wireless device 120 on each of the networks. For example, the system selection data may include an identifier associated with the wireless device 120 on each of the networks available to the wireless device. In this way, if more than one of the available networks are managed or controlled by the same entity, the system selection network device 105 may associate these identities as belonging to the same device 120.

Using the above information, the system selection network device 105 may elect to refuse service to or disconnect from the wireless device 120 if the wireless network implemented by the access point 115 is congested and the system selection network device 105 determines that the network device 105 has access to a viable alternative network.

Additionally or alternatively, the system selection data transmitted by the wireless device 120 may include pricing information associated with transmitting data over different networks. In other words, the system selection data may inform the system selection network device 105 of details associated with a data pricing plan on each of the networks to which the wireless device 120 has connectivity or a subscription, including the wireless network implemented by the access point 115. In certain examples, the system selection data may include information indicating, for each network available to the wireless device 120, whether there is a limited or unlimited data plan in place for that network. For networks where a limited data plan is in place, the system selection data may include the limit(s) associated with the data plan and a current amount of data used by the wireless device 120. The system selection data may further include the price to the user of the wireless device 120 for accessing data at each network available to the wireless device 120. Using the pricing information, the system selection network device 105 may make a system selection decision that ensures the wireless device 120 is assigned to a system which works out to be the least expensive to the user of the wireless device 120.

Additionally or alternatively, the system selection data may include network data policy information associated with one or more applications running on the wireless device 120. For example, an operator or user policy may restrict an application currently running on the wireless device to work with only a particular type of network. For instance, a video streaming application may be configured to only stream video data over a Wi-Fi connection (as opposed to a cellular network). The system selection data may therefore inform the system selection network device 105 of policies and restrictions applications currently running on the wireless device 120 such that system selection by the system selection network device 105 takes into account these policies and restrictions when determining whether to grant or deny the wireless device 120 access to the wireless network or to transition the wireless device 120 to a different system.

Additionally or alternatively, the system selection data transmitted by the wireless device 120 may specify a type (e.g., video streaming, VOIP call, background update, etc.) of one or more applications currently running on the wireless device 120. For example, if the wireless device 120 is running a video streaming or VOIP call application, the system selection network device 105 may elect not to disconnect the wireless device 120 from a Wi-Fi network or transition the wireless device 120 to a cellular network. On the other hand, if the wireless device 120 is currently running applications that only utilize the network for background updates, the system selection network device 105 may elect to disconnect the wireless device 120 from the access point 115 and/or transition the wireless device 120 to a different system.

Additionally or alternatively, the system selection data may include Quality of Service (QoS) or throughput requirements for one or more applications currently running on the wireless device 120. In this way, if the system selection network device 105 determines that the overall QoS or throughput requirements for the wireless device 120 are relatively low, the system selection network device may choose to allow the wireless device 120 to remain connected to the access point 115 and transition a different wireless device to an alternative network.

The system selection data from the wireless device 120 may additionally or alternatively include an indication of a tolerance to changes in IP address for at least one application currently running on the wireless device 120. In certain examples, if a change in IP address would degrade the user experience for at least one application currently running on the wireless device 120, the system selection network device 105 may favor keeping the wireless device 120 on the wireless network implemented by the access point 115.

Additionally or alternatively, the system selection data from the wireless device 120 may include an indication of a current level of activity of the wireless device 120. For example, the system selection data may indicate whether the wireless device 120 is in a sleep state or background mode. Such a state of inactivity may weigh in favor of transitioning the wireless device 120 to another network, as the user may be unlikely to notice any disturbance in network connectivity during the transition. In other examples, such a state of inactivity may indicate that transitioning the wireless device 120 to another network would do little to decrease the congestion at the access point 115, and therefore weigh in favor of maintaining a connection to the wireless device 120 at the access point 115.

In certain examples, the system selection data from the wireless device 120 may include an indication of power consumption associated with conducting data transactions over at least one network available to the wireless device 120. This indication may be based on estimated power consumption based on the version or capabilities supported by each network. The power consumption data may, for example, be retrieved from a look up table or other storage structure. In certain examples, the power consumption data may be based on trends derived from empirically observed data. In certain examples, the system selection data may include an indication of a battery level of the wireless device 120. Using the above power consumption data, the system selection network device 105 may elect to keep the wireless device 120 on the wireless network implemented by the access point 115 if doing so would consume less power than alternative networks or if the wireless device 120 has a battery level below a certain threshold. However, if an alternative network would provide power savings to the wireless device 120, the system selection network device 105 may elect to transition the wireless device 120 to a different network.

The system selection data may additionally or alternatively include an indication of a status of at least one buffer associated with the wireless device 120. For example, the wireless device 120 may report its transmit buffer occupancy in the system selection data to indicate how much data is waiting for transmission. A large or growing transmit buffer occupancy may be used as an indication by the system selection network device 105 that the wireless device 120 is experiencing poor connectivity, and may be used to trigger a system reselection. Similarly, during streaming media playback or other data-intensive activities, the wireless device 120 may report in the system selection data the status of a playback buffer to indicate whether there is enough data in the buffer, or whether the media content is likely to be interrupted soon. Potential playback interruption may then be used by the system selection network device 105 as a trigger for system reselection.

In certain examples, the system selection network device 105 may use a combination of two or more of the above factors in the system selection data from the wireless device 120 to perform system selection in a manner that provides enhanced user experience. Using the system selection data reported by the wireless device to make system selection decisions may result in reduced battery consumption at the wireless device 120, reduced cost for network connectivity, and less disruption in network access. These results may be due to better agreement between system selection and relevant aspects of the wireless device 120, such as operator policy, device capabilities, application requirements, buffer occupancy, power consumption, battery availability, the existence of alternative networks, and/or the like.

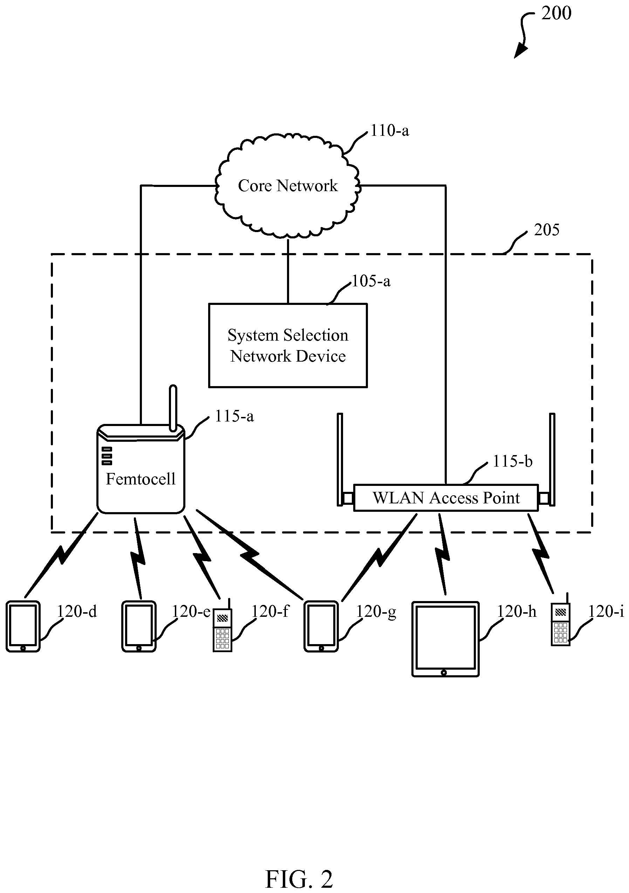

**FIG. 2** shows a block diagram of another example of a wireless communications system 200. The system 200 may be an example of the system 100 described above with respect to FIG. 1. The system 200 may include a system selection network device 105-a, a core network 110-a, a femtocell 115-a, a WLAN access point 115-b, and a number of terminal wireless devices 120. In certain examples, the functionality of the system selection network device 105-b may be integrated into one or both of the femtocell 115-a or the WLAN access point 115-b. Alternatively, the system selection network device 105-a may be a standalone device in communication with the femtocell 115-a and the WLAN access point 115-b over the core network 110-a or another type of connection. In certain examples, the system selection network device 105-a, the femtocell 115-a, and the WLAN access point 115-b may be integrated into a single appliance 205 or system of collocated appliances.

Each of the femtocell 115-a and the WLAN access point 115-b may be an example of the access point 115 described above with reference to FIG. 1. Similarly, the system selection network device 105-a-a may be an example of the system selection network device 105 described above with reference to FIG. 1. In certain examples, the core network 110-a may be a LAN that provides access to the Internet (not shown). Thus, the femtocell 115-a may communicate with wireless devices 120-d, 120-e, 120-f, 120-g using cellular protocols and standards (e.g., LTE, LTE-A, WiMAX, 3G, cdma2000, etc.) to provide access to a cellular network and the Internet by means of the core network 110-a. The WLAN access point 115-b may provide wireless devices 120-g, 120-h, 120-i access to the core network 110-a and the Internet using WLAN protocols and standards (e.g., IEEE 802.11x).

The same system selection network device 105-a may control system selection decisions for each wireless device 120 connected to either the femtocell 115-a or the WLAN access point 115-b. Thus, the system selection network device 105-a may receive system selection data from devices 120-d, 120-e, 120-f, and 120-g through the femtocell 115-a and from devices 120-g, 120-h, and 120-i through the WLAN access point 115-b. The system selection data for a wireless device 120 may include an indication of the availability of application layer data access through the femtocell 115-a, the WLAN access point 115-b, or another outside network.

In certain examples, one or more of the wireless device 120 may verify whether data access is available to the wireless device 120 through the femtocell 115-a, the WLAN access point 115-b, and/or an outside network before transmitting the system selection data. This verification may occur through an actual connection to each network, a query to each network, a set of subscription rules, or other methods. In certain examples, the system selection data may include, for one or more alternative networks, an indication of whether the wireless device 120 has verified the availability of application layer or other data access through that network.

In certain examples, the system selection data may include one or more of: an indication of an amount of ongoing traffic at the wireless device 120, an indication of whether the wireless device 120 is capable of communicating with cellular networks, an indication of whether the wireless device 120 is currently in cellular roaming, an indication of the WLAN and cellular features supported by the wireless device 120, an indication of a handover history for the wireless device 120, and/or other relevant system selection data as described above with reference to FIG. 1.

The system selection network device 105-a may solicit the system selection data from one or more wireless devices 120 and make system selection decisions for the one or more wireless devices 120 in response to detecting a threshold amount of network congestion or quality of service degradation at one or more of the femtocell 115-a and the WLAN access point 115-b. Additionally or alternatively, the system selection network device 105-a may make system selection decisions for one or more wireless devices 120 in response to receiving unsolicited system selection data from the one or more wireless devices 120. The system selection network decision may be based on the application of a number of priority rules to the received system selection data for each wireless device.

Examples of a system selection decision made at the system selection network device 105-a for a wireless device 120 may include, but are not limited to, at least one or more of: determining whether to transition the wireless device 120 from the femtocell 115-a to the WLAN access point 115-b, determining whether to transition the wireless device 120 from the WLAN access point 115-b to the femtocell 115-a, determining whether to transition the wireless device 120 to an alternative system not controlled by the system selection network device 105-a, determining whether to allow or deny the wireless device 120 access to one or both of the femtocell 115-a and WLAN access point 115-b, and other types of system selection decisions.

The system selection network device 105-a may establish a set of priority rules associated with both the femtocell 115-a and the WLAN access point 115-b for use in making the system selection decisions for the wireless devices 120. By applying these rules to system selection data received from one of the wireless devices 120, the system selection network device 105-a may determine a priority for that wireless device 120. By comparing the determined priority of the wireless device 120 with the determined priority of other wireless devices 120, the system selection network device 105 may determine which of the wireless devices 120 should be disconnected or transitioned away from each system. For example, if the femtocell 115-a becomes congested, wireless devices 120-d, 120-e, 120-f, and 120-g may be transitioned from the femtocell 115-a to the WLAN access point 115-b or another system in an order determined by the respective priority of each of these wireless devices 120-d, 120-e, 120-f, 120-g to relieve the congestion and balance network loads.

In certain examples, a set of general admission control system selection priority rules may be applied by the system selection network device 105-a to the received system selection data when making admission control system selection decisions. In certain examples, the following general admission control system selection priority rules may be enforced:
1. If a first wireless device 120 only has service on one of the femtocell 115-a or the WLAN access point 115-b, the first wireless device 120 may be given higher admission priority for the system on which it has service than a second wireless device 120 having service on both the femtocell 115-a and the WLAN access point 115-b.
2. If a first wireless device 120 incurs higher data charges on one of the femtocell 115-a or the WLAN access point 115-b, the wireless device 120 may be given higher admission priority to its lowest-cost system than a second wireless device 120 having low data charges on both the femtocell 115-a and the WLAN access point 115-b.
3. If a first wireless device 120 has a higher throughput capability on one of the femtocell 115-a or the WLAN access point 115-b, the first wireless device 120 may be given a higher priority on that system than a wireless device 120 with a lower throughput capability on that system.

In addition to the above general priority rules, system-specific admission control system selection priority rules may also be applied to the system selection data received from the wireless devices 120 when making system selection decisions. For example, wireless device 120 admission priority at the WLAN access point 115-b may be determined by applying the following additional admission control rules:
1. Wireless devices 120 with ongoing data traffic may have higher priority to the WLAN access point 115-b than wireless devices 120 without ongoing data traffic;
2. Wireless devices 120 without cellular service may have higher priority to the WLAN access point 115-b than wireless devices with cellular service;
3. Among cellular capable wireless devices 120, wireless devices 120 that are in cellular roaming may have higher priority to the WLAN access point 115-b than wireless devices 120 not in roaming;
4. Wireless devices 120 with higher WLAN capability may have higher priority to the WLAN access point 115-b than wireless devices 120 with lower WLAN capability, as measured by at least one of:
   a. the maximum supported physical layer rate for the wireless device 120 (e.g., 802.11(b) v. 802.11(n));
   b. the authentication and encryption method of the wireless device 120 (e.g., WEP v. WPA authentication);
   c. the channels supported by the wireless device 120 (e.g., 20 MHz operation v. 40 MHz Operation);
   d. whether the wireless device 120 supports green field format and reduced inter-frame spacing (e.g., only allowing low-efficiency operation at the access point 115-b)
5. Wireless devices 120 without a history of frequent cellular handovers may have higher priority to the WLAN access point 115-b than wireless devices 120 with a history of frequent handovers.

In certain examples, enumerated rules 4-5 above may be applied only to cellular-capable wireless devices 120. Additionally, in certain examples, rules 1-5 above may be ordered according to decreasing importance.

System selection priority rules may also be defined for making admission control system selection decisions for the femtocell 115-a. For example, wireless device 120 priority at the femtocell 115-a may be determined by applying the following additional admission control rules:
1. Wireless devices 120 without WLAN capability or service may have higher priority to the femtocell 115-a than wireless devices 120 with WLAN capability or service.
2. Wireless devices 120 not in cellular roaming may have higher priority to the femtocell 115-a than wireless devices 120 in cellular roaming.
3. Wireless devices 120 without a history of frequent handovers may have higher priority to the femtocell 115-a than wireless devices with a history of frequent handovers.

In certain examples, enumerated rules 2-3 above may be applied only to WLAN-capable wireless devices 120. Additionally, in certain examples, rules 1-3 above may be ordered according to decreasing importance.

In addition to the above described admission control decisions, a switching priority may be determined for the wireless devices 120 when determining whether to transition a wireless device 120 from the femtocell 115-a to the WLAN access point 115-b or vice versa. In determining this priority, the following general rules may be implemented:
1. Switched wireless devices 120 will have service on the new system and should not have applications permitted only on the old system.
2. Switching priority may be higher for wireless devices 120 associated with users who express a higher desire for better performance.
3. Switching priority may be higher for wireless devices 120 running applications with a higher tolerance for switching-based performance degradation.
4. Switching priority may be higher for wireless devices 120 for which a switch to the new system would increase efficiency.

Furthermore, priority rules may be established specifically for transitions from the femtocell 115-a to the WLAN access point 115-b. In certain examples, one or more of the following femto-to-WLAN switching priority rules, listed in order of decreasing importance, may be implemented:
1. Wireless devices connected to the femtocell 115-a that have WLAN capabilities may be switched out of the femtocell 115-a earlier than wireless devices 120 without WLAN capabilities.
2. Wireless devices 120 connected to the femtocell 115-a running applications that are permitted only on cellular networks may be switched out of the femtocell 115-a later than wireless devices 120 that are not running such applications. The wireless devices 120 running applications that are permitted only on cellular networks may be switched to a macrocell if appropriate.
3. Wireless devices 120 connected to the femtocell 115-a with more resource usage (e.g., as measured by downlink transmit power, uplink received signal strength indicator, frame activity, etc.) may be switched out earlier than wireless devices 120 with less resource usage.
4. Wireless devices 120 connected to the femtocell 115-a with a large transmit buffer size (indicating a desire for a higher data transfer rate) may be switched out earlier than those with a small transmit buffer size.
5. Wireless devices 120 connected to the femtocell 115-a with a large receive buffer size (indicating a greater tolerance to switching delay) may be switched out earlier than those with a small receive buffer size.
6. Wireless devices 120 connected to the femtocell 115-a with real-time applications, which are less tolerable to switching delays, may be switched out later than those without real-time applications.
7. Wireless devices 120 connected to the femtocell 115-a with high cellular service usage or charges may be switched out earlier than those with lower cellular usage or charges (e.g., wireless devices 120 in cellular roaming may be switched out earlier).
8. Among WLAN capable wireless devices 120 connected to the femtocell 115-a, wireless devices 120 having a higher WLAN capability may be switched out earlier than those with a lower WLAN capability.
9. Wireless devices 120 connected to the femtocell 115-a with downlink traffic may be switched out of the femtocell 115-a earlier than wireless devices 120 with uplink traffic.

Additionally, priority rules may be established specifically for transitions from the WLAN access point 115-b to the femtocell 115-a. In certain examples, one or more of the following WLAN-to-femto switching priority rules, listed in order of decreasing importance, may be implemented:
1. Wireless devices 120 connected to the WLAN access point 115-b that have cellular service may be switched out from the WLAN access point 115-b earlier than wireless devices 120 without cellular service.
2. Wireless devices 120 connected to the WLAN access point 115-b with applications only permitted on WLAN networks may be switched out from the WLAN access point 115-b later than wireless devices 120 without such applications.
3. Wireless devices 120 connected to the WLAN access point 115-b with more resource usage may be switched out from the WLAN access point 115-b earlier than wireless devices 120 with less resource usage.
4. Wireless devices 120 connected to the WLAN access point 115-b with a large transmit buffer size may be switched out from the WLAN access point 115-b earlier than wireless devices 120 with a small transmit buffer size.
5. Wireless devices 120 connected to the WLAN access point 115-b with a large receive buffer size may be switched out from the WLAN access point 115-b earlier than wireless devices 120 with a small receive buffer size.
6. Wireless devices 120 connected to the WLAN access point 115-b running real-time applications may be switched out from the WLAN access point 115-b earlier than wireless devices 120 that are not running real-time applications.
7. Wireless devices 120 connected to the WLAN access point 115-b with low cellular service usage or charges may be switched out from the WLAN access point 115-b earlier than wireless devices 120 with high cellular usage or charges.
8. Wireless devices 120 connected to the WLAN access point 115-b with high cellular capabilities may be switched out from the WLAN access point 115-b earlier than wireless devices 120 with low cellular capabilities.
9. Wireless devices 120 connected to the WLAN access point 115-b with uplink traffic may be switched out from the WLAN access point 115-b earlier than wireless devices 120 with downlink traffic.

With respect to the above sets of rules, it should be understood that the importance order of the factors in each list may be further optimized according to the specification of a specific system or set of systems. In certain examples, multiple wireless devices 120 with a higher priority than other wireless devices 120 may be switched out from the femtocell 115-a or the WLAN access point 115-b simultaneously to speed up congestion relief. In certain examples, priority for WLAN-to-femto switching may also be applicable to WLAN-to-macro switching, which may occur when both the WLAN access point 115-b and the femtocell 115-a are congested.

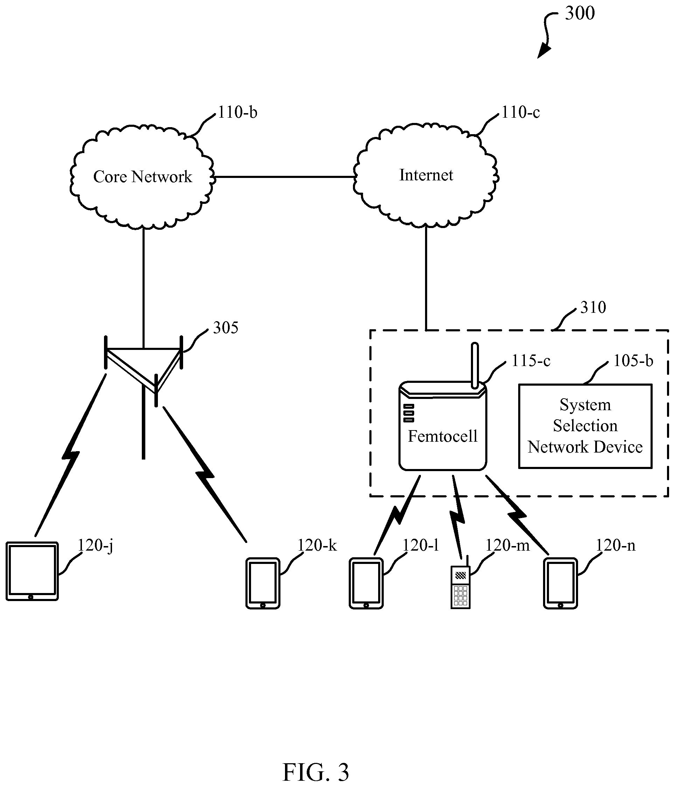

**FIG. 3** shows a block diagram of another example of a wireless communications system 300. The system 300 may be an example of the systems 100, 200 described above with respect to the preceding Figures. The system 300 may include a system selection network device 105-b, a femtocell 115-c, a system selection network device 105-b, a macrocell 305, a core network 110-b, a wide area network such as the Internet 110-c, and a number of terminal wireless devices 120. In certain examples, the functionality of the system selection network device 105-b may be integrated into the femtocell 115-a. Thus, the system selection network device 105-b and the femtocell may be components of a single appliance 310 or system of collocated appliances. Alternatively, the system selection network device 105-b may be a standalone device in communication with the femtocell 115-a over the core network 110-b or another type of connection.

In the present example, the femtocell 115-c and the macrocell 305 may be components of the same cellular network, and the femtocell 115-c may be deployed within a coverage area of the macrocell 305. The system selection network device 105-b may elect to transition one or more of the wireless devices 120 connected to the femtocell 115-c to the macrocell 305 in response to system selection data received from at least one of the wireless devices 120.

The system selection network device 105-b may solicit and receive the system selection data from each wireless device 120 connected to the femtocell 115-c. The system selection data received from these wireless devices 120 may indicate an identification of one or more networks through which the wireless devices 120 has verified that data access is available to the wireless device 120. The system selection data received from each wireless device 120 may include an identifier assigned to that wireless device 120 on each network for which there is verified data access, including both the macrocell 305 and the femtocell 115-c. Thus, if the system selection network device 105-b communicates with the macrocell 305 or some other entity at the core network 110-b to obtain information about wireless devices 120 connected to the macrocell, the system selection network device 105-b may associate the wireless devices 120 referenced in the obtained information with wireless devices currently connected to the femtocell 115-c.

In certain examples, the system selection data received from each wireless devices 120 may include pricing information associated with transmitting data over one or more of the macrocell 305, the femtocell 115-c, or another network; information about one or more application(s) currently running on the wireless device 120; an indication of power consumption associated with conducting data transactions over one or more of the macrocell 305, the femtocell 115-c, or another network; a battery level of the wireless device 120, a status of a transmit or receive buffer of the wireless device 120, or other relevant system selection data.

Based on the system selection data received from the wireless devices 120, the system selection network device 105-b may make a system selection decision for one or more of the devices 120. The system selection decision for a wireless device 120 may include an admission control decision (e.g., whether to allow the wireless device 120 to connect to one or both of the macrocell 305, femtocell 115-c, or another available network); a decision of whether to transition the wireless device 120 from a current network to the macrocell 305, the femtocell 115-c or to another available network; or a decision of whether to move traffic of the wireless device 120 to the macrocell 305, femtocell 115-c, or another available network without disconnecting the wireless device 120 from a current network selection. The system selection network device 105-b may then implement the system selection decision to complete system selection for that wireless device 120.

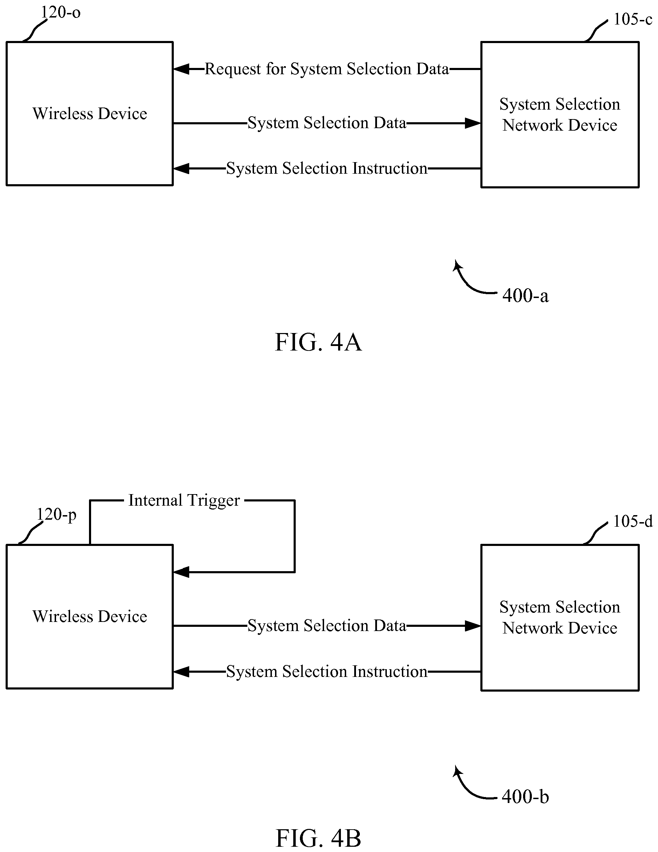

**FIG. 4A** and **FIG. 4B** show block diagrams of example systems in which communications are exchanged between an example wireless device 120 and an example system selection network device 105-c to perform system selection according to the principles of this disclosure. The wireless devices 120 and system selection network devices 105 of FIGS. 4A and 4B may be examples of the wireless devices 120 and system selection network devices 105 described above with respect to the preceding Figures. It should be understood that while the wireless device 120 of each example is shown communicating directly with the system selection network device 105 for purposes of clarity, one or more devices may be disposed in the communication path intermediate the wireless device 120 and the system selection network device 105. For example, the wireless device 120 may communicate with the system selection network device 105 over a cellular or WLAN network for which the system selection network device manages system selection.

In the example of **FIG. 4A****,** the system selection network device 105-c generates a request for system selection data from the wireless device 120-0. The request may be generated in response to a trigger at the system selection network device 105-c. For example, the system selection network device 105-c may determine that a congestion of the wireless network has exceeded a predetermined threshold or that a quality of the wireless link between the wireless device 120 and the network has fallen below a predetermined threshold. The wireless device 120-o may receive the request for system selection data and generate the system selection data for use by the system selection network device.

In certain examples, the request may specify the type of system selection data requested. Additionally or alternatively, a default type of system selection data may be implied with the request. In still other examples, the wireless device 120-o may choose one or more types of system selection data for transmission to the system selection network device based on a determination that the selected types of system selection data would be most relevant to the system selection decision. The system selection data may already be stored at the wireless device. In additional or alternative examples, the wireless device 120-o may calculate or compile the system selection data from information stored at the wireless device 120-o and/or retrieve components of the system selection data from an external source. The wireless device 120-o may then transmit the system selection data to the network, where the system selection data may be eventually received by the system selection network device 105-c.

The system selection network device 105-c may apply a set of rules to the received system selection data to determine whether to permit a new connection by the wireless device 120-o to the wireless network, maintain an existing connection of the wireless device 120-o to the wireless network, disconnect and transition the wireless device 120-o to an alternative network, or transition data transactions to an alternative network without disconnecting the wireless device 120-o from the current wireless network. In certain examples, the wireless device 120-o may also apply one or more of the same or different rules to the system selection data and transmit a recommended system selection decision for consideration by the system selection network device 105-c. In certain examples, the system selection network device 105-c may give deference to a recommended system selection decision made by the wireless device 120-0.

An instruction may then be transmitted to the wireless device 120-o based on the system selection decision made by the system selection network device 105-c. The system selection instruction may instruct the wireless device 120-o to establish a new connection with one or more wireless networks, disconnect from one or more wireless networks, and/or maintain an existing connection with one or more wireless networks.

The communication between the wireless device 120-p and the system selection network device 105-b of **FIG. 4B** is similar to that of FIG. 4A, with the difference being that in the example of FIG. 4B, the wireless device 120-p initiates the transmission of the system selection data to the network for use in the system selection decision by the system selection network device 105-d. The wireless device 120-p may generate and transmit the system selection data in response to an identified internal trigger detected at the wireless device 120-p. In certain examples, the internal trigger may include a detected change in one or more components of the system selection data.

Thus, in certain examples, the internal trigger may include detecting at the wireless device 120-o that a change in system selection data has occurred. For example, the internal trigger may be a determination that a change in connectivity state has occurred between the wireless device 120-o and at least one of the wireless network associated with the system selection network device 105-c or another network available to the wireless device 120-o.

Additionally or alternatively, the internal trigger may include a detected change in a price associated with transmitting data over the wireless network associated with the system selection network device 105-c or another network available to the wireless device 120-0. Additionally or alternatively, the internal trigger may include a detected change in a network policy associated with at least one application running on the wireless device 120-0. Additionally or alternatively, the internal trigger may include a detected change in a type of application running on the wireless device 120-0 or a status of at least one application running on the wireless device 120-0. Additionally or alternatively, the internal trigger may include a detected change in an occupancy level of a transmit or receive buffer of the wireless device 120-0. Additionally or alternatively, the internal trigger may include a detected change in a battery level of the wireless device 120-0 (e.g., a drop below a predetermined threshold).

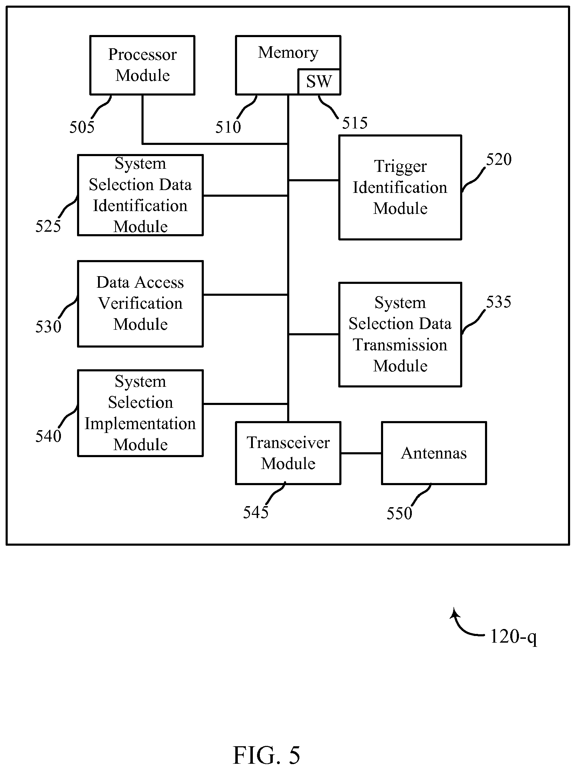

**FIG. 5** shows a block diagram of one example of a wireless device 120-q in accordance with the principles described herein. The wireless device 120-q may be an example of one or more of the wireless devices 120 described above with reference to the preceding Figures. As shown in FIG. 5, the wireless device 120-q may include a processor module 505, a memory 510, a trigger identification module 520, a system selection data identification module 525, a data access verification module 530, a system selection data transmission module 535, a system selection implementation module 540, a transceiver module 545, and antennas 550. Each of these components may be communicatively coupled with each other, directly or indirectly. The processor module 505 may be configured to execute software 515 stored by memory 510 to implement all or some of the functionality of the trigger identification module 520, the system selection data identification module 525, the data access verification module 530, the system selection data transmission module 535, the system selection implementation module 540, or the transceiver module 545.

The trigger identification module 520 may be configured to identify a trigger associated with system selection by a network device for the wireless device 120-q. As described in the preceding Figures, the trigger may include a request received over a network for system selection data. Additionally or alternatively, the trigger may be a detected change in one or more components of the system selection data at the wireless device 120-q. For example, the trigger identification module 520 may monitor and detect changes in connectivity state between the wireless device and one or more networks, changes in prices associated with data consumption and transmission over one or more networks, changes in network policies associated with applications running on the wireless device 120-q, changes in the type or identity of applications running on the wireless device, changes in the status of at least one application running on the wireless device, changes in a state (e.g., sleep state vs. active state) of the wireless device 120-q, changes in transmit or receive buffers associated with the wireless device 120-q, changes in a battery level of the wireless device, and/or other relevant changes at the wireless device 120-q or the networks available to the wireless device 120-q. The trigger identified at the trigger identification module 520 may be based on at least one or more of these detected changes.

The system selection data identification module 525 may, in response to the trigger, identify system selection data at the wireless device 120-q for use by a network device in performing a network directed system selection decision for the wireless device. The system selection data may include an indication of one or more networks through which the data access verification module 530 has verified that data access is available to the wireless device 120-q.

As described above, the data access verification module 530 may verify that data access is available to the wireless device through an alternative network using a number of different techniques. For example, the data access verification module 530 may cause the wireless device 120-q to connect to the alternative network (while maintaining a concurrent connection with a first network) to ping a web service and determine whether a response is received. Alternatively, the data access verification module 530 may cause the wireless device 120-q to communicate with the alternative network to query whether application-layer or other forms of data access are available to the wireless device 120-q. In still other examples, the data access verification module 530 may determine whether data access is available through an alternative network based on a subscription associated with the wireless device 120-q and the identity of the alternative network.

The system selection data may additionally or alternatively include at least one or more of 1) wireless capabilities of the wireless device, 2) an indication of whether one or more alternative wireless networks are available to the wireless device 120-q and identities associated with the wireless device 120-q for the alternative networks, 3) pricing details associated with network connectivity and data transmission for one or more networks, 4) network policies associated with one or more applications currently running on the wireless device 120-q, 5) the type of application(s) currently running on the wireless device 120-q, 6) QoS and other requirements for application(s) currently running on the wireless device 120-q, 7) measured or estimated power consumption data associated with transmitting or receiving data over one or more of the networks available to the wireless device 120-q, 8) buffer occupancy information for the wireless device 120-q, or other relevant information about the wireless device or wireless networks available to the wireless device 120-q.

The system selection data transmission module 535 may control the transceiver module 545 to transmit the identified system selection data to at least a first wireless network to which the wireless device 120-q is either connected or attempting to connect. In certain examples, the system selection data may be forwarded to a system selection network device incorporated into or associated with an access point of the first wireless network. The system selection implementation module 540 may receive through the transceiver module 545 a system selection instruction from the first wireless network. The system selection instruction may include an instruction to connect to the first wireless network, an instruction to continue a connection at the first wireless network, an instruction to disconnect from the first wireless network, and/or an instruction to connect to an alternative wireless network. The system selection implementation module 540 may carry out the received system selection instruction.

In certain examples, if no express instruction is received from the first wireless network in response to the system selection data, the system selection implementation module 540 may identify a default course of action (e.g., continue a connection with the first wireless network) to take.

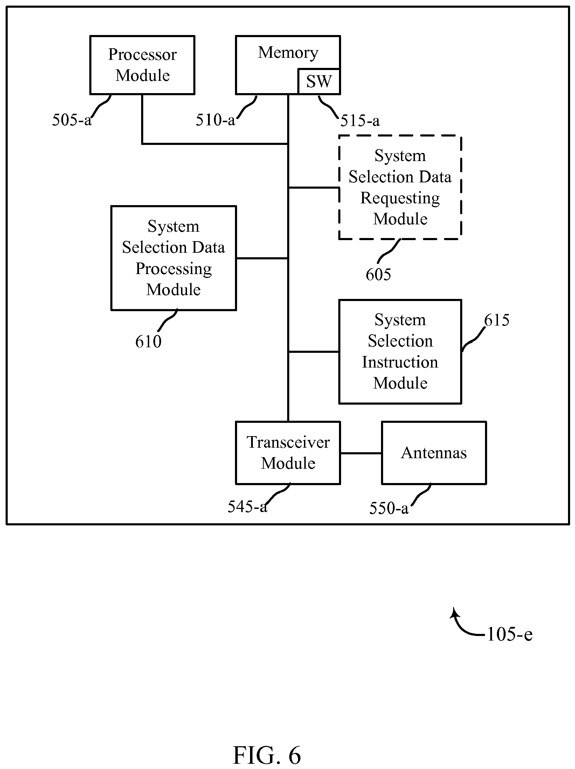

**FIG. 6** shows a block diagram of one example of a system selection network device 105-e in accordance with the principles described herein. The system selection network device 105-e may be associated with at least one wireless network and configured to perform network-directed system selection for terminal wireless devices that are connected to or seeking connections to the wireless network. The system selection network device 105-e may be an example of one or more of the system selection network devices 105 described above with reference to the preceding Figures. As described above, the system selection network device 105-e may be incorporated into or otherwise associated with an access point or other network device.

As shown in FIG. 6, the system selection network device 105-e may include a processor module 505-a, a memory 510-a, a system selection data requesting module 605, a system selection data processing module 610, a system selection instruction module 615, a transceiver module 545-a, and antennas 550-a. Each of these components may be communicatively coupled with each other, directly or indirectly. The processor module 505-a may be configured to execute software 515-a stored by memory 510-a to implement all or some of the functionality of the system selection data requesting module 605, the system selection data processing module 610, the system selection instruction module 615, or the transceiver module 545-a.

The system selection data requesting module 605 may, in response to a trigger, generate a request for system selection data from a wireless device. In certain examples, the trigger may be a determination that a level of congestion associated with the wireless network has exceeded a predetermined threshold or a quality of a wireless link with the wireless device has fallen below a predetermined threshold. In certain examples, the system selection data requesting module 605 may be optional, as the wireless device may initiate transmission of the system selection data on its own.

The system selection data processing module 610 may receive the system selection data from the wireless device via transceiver module 545-a. As described above, the system selection data may include an indication of one or more networks through which the wireless device has verified that data access is available to the wireless device. In certain examples, the system selection data may include at least one or more of: 1) wireless capabilities of the wireless device, 2) an indication of whether one or more alternative wireless networks are available to the wireless device and identities associated with the wireless device for the alternative networks, 3) pricing details associated with network connectivity and data transmission for one or more networks, 4) network policies associated with one or more applications currently running on the wireless device, 5) the type of application(s) currently running on the wireless device, 6) QoS and other requirements for application(s) currently running on the wireless device, 7) measured or estimated power consumption data associated with transmitting or receiving data over one or more of the networks available to the wireless device, 8) buffer occupancy information for the wireless device, or other relevant information about the wireless device or wireless networks available to the wireless device.

As described in more detail with reference to the preceding Figures, the system selection data processing module 610 may apply a set of rules to the received system selection data to perform a system selection decision for the wireless device. The system selection instruction module 615 may then generate a system selection instruction for transmission to the wireless device to implement the system selection decision.

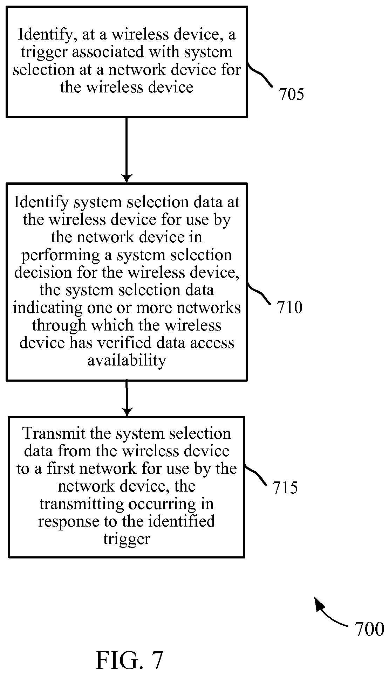

**FIG. 7** shows a flowchart of an example of a method 700 of network directed system selection according to the principles of the present disclosure. The method 700 of FIG. 7 may be performed, for example, by one or more of the wireless devices 120 described above with reference to the preceding Figures. At block 705, a trigger may be identified at a wireless device, where the trigger is associated with system selection by a network device (e.g., system selection network device 105) for the wireless device. At block 710, system selection data may be identified at the wireless device for use by the network device in performing a system selection decision for the wireless device. The system selection data may indicate one or more networks through which the wireless device has verified the availability of data access. At block 715, the system selection data may be transmitted from the wireless device to a first network for use by the network device. The system selection data may be transmitted in response to the identified trigger.

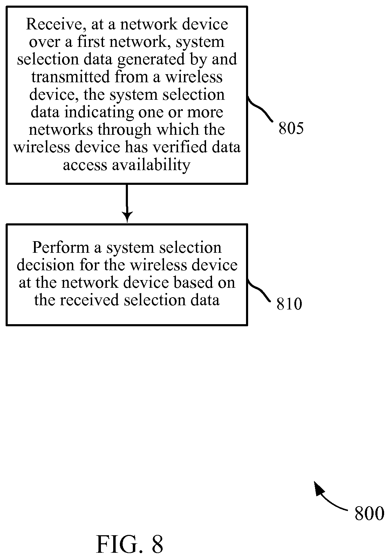

**FIG. 8** shows a flowchart of an example of a method 800 of network directed system selection according to the principles of the present disclosure. The method 800 of FIG. 8 may be performed, for example, by one or more of the system selection network devices 105 described above with reference to the preceding Figures. At block 805, system selection data may be received over a first network at the network device. The system selection data may be generated by and transmitted form a wireless device (e.g., wireless device 120). The system selection data may indicate one or more networks through which the wireless device has verified the availability of data access to the wireless device. At block 810, a system selection decision may be performed for the wireless device at the network device based on the received selection data. The system selection decision may include at least one of an admission control decision for the first network, a decision of whether to transition the wireless device from the first network to a second network, or a decision to transition data transactions of the wireless device from the first network to the second network while the wireless device remains connected to both the first and second networks.

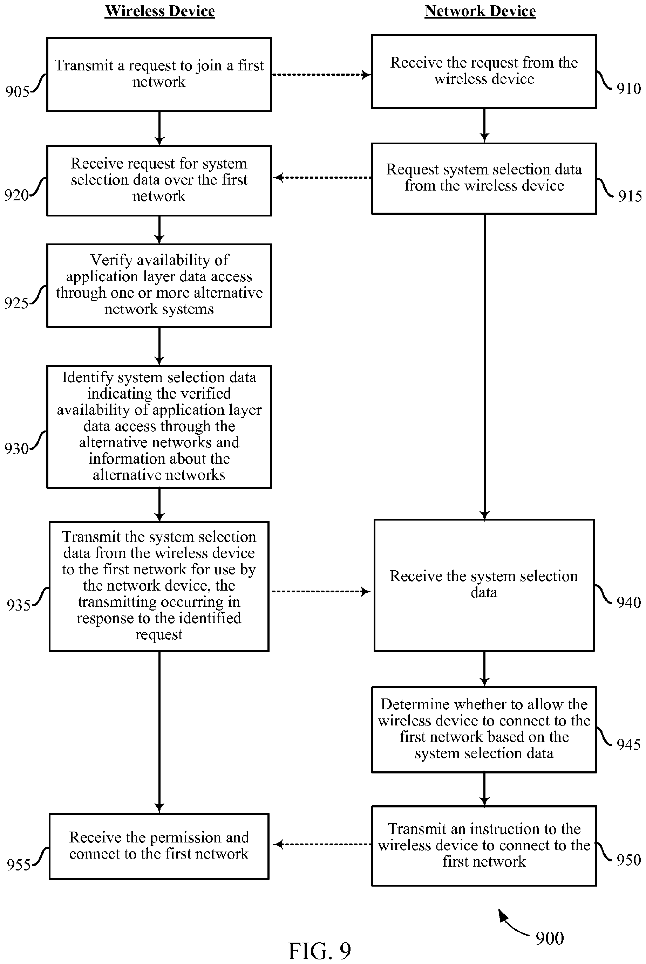

**FIG. 9** shows a flowchart of an example of a method 900 of network directed system selection as implemented by a wireless device (e.g., wireless device 120) and a network device (e.g., system selection network device 105) according to the principles of the present disclosure. At block 905, the wireless device may transmit a request to join a first network. The request may be received by the network device at block 910. In certain examples, the wireless device and network device may communicate directly with each other. Alternatively, one or more network devices may be logically disposed between the wireless device and the network device to implement the communication shown in FIG. 9.

At block 915, the network device may request system selection data from the wireless device. In certain examples, the request may specify the type of system selection data requested from the wireless device. Alternatively, the request may imply that a default set of system selection data is requested. In other examples, the network device may not specify the type of system selection data requested from the wireless device and allow the wireless device to transmit all of the system selection data available to the wireless device or a subset of the system selection data selected by the wireless device.

At block 920, the wireless device may receive the request for the system selection data over the first network. At block 925, the wireless device may verify the availability of application layer data access through one or more alternative systems. At block 930, the wireless device may identify system selection data indicating the verified availability of application layer data access through the alternative network(s) and information about the alternative network(s). For example, the system selection data may include a name or identifier of each alternative network, a network type associated with each of the alternative networks, an identifier assigned to the wireless device on each of the alternative networks, and/or other relevant information. At block 935, the wireless device may transmit the system selection data to the first network for use by the network device in response to the request.

At block 940, the network device may receive the system selection data generated and transmitted by the wireless device. At block 945, the network device may make an admission control decision to determine whether to allow the wireless device to connect to the first network. This decision may be based on the system selection data. For example, the network device may evaluate the availability of other wireless networks to the wireless device or the wireless capabilities of the wireless device. In the present example, the network device may choose to grant the wireless device permission to connect to the first network based on a determination that the first network is not congested and that the first network is the best alternative for the wireless device. At block 950, the network device may transmit an instruction to the wireless device to connect to the first network, and at block 955, the wireless device may receive the permission and connect to the first network.

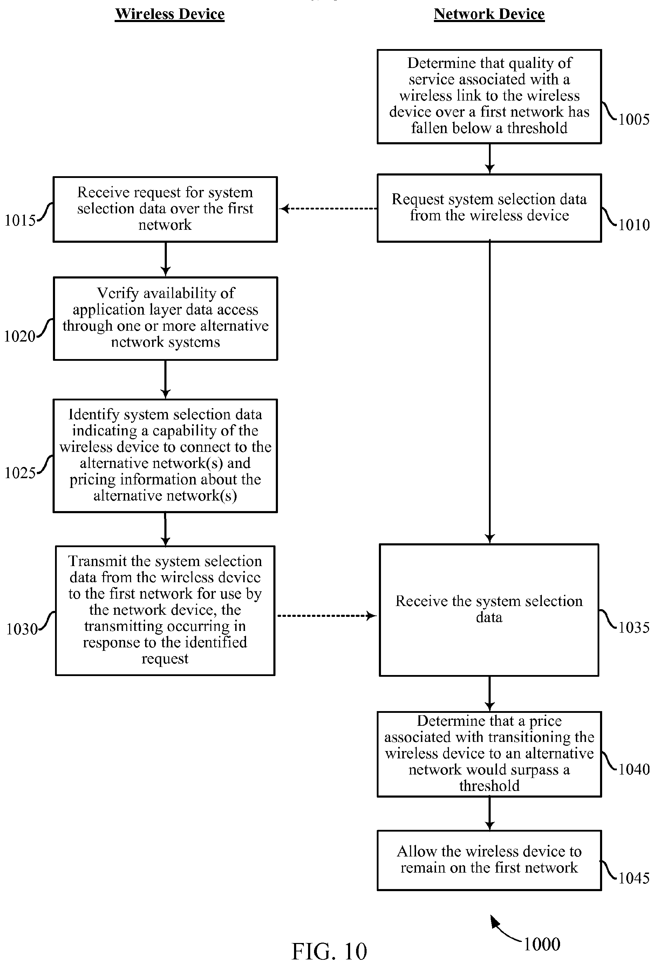

**FIG. 10** shows a flowchart of an example of a method 1000 of network directed system selection as implemented by a wireless device (e.g., wireless device 120) and a network device (e.g., system selection network device 105) according to the principles of the present disclosure. At block 1005, the network device may determine that a quality of service associated with a wireless link to the wireless device over a first network has fallen below a threshold. This may trigger the network device to request system selection data from the wireless device at block 1010. At block 1015 the request may be received by the network device.

At block 1020, the wireless device may verify the availability of application layer data access through one or more alternative networks. At block 1025, the wireless device may identify system selection data indicating a capability of the wireless device to connect to at least one of the alternative networks with verified data access availability and pricing information associated with data transmission on the first network and the at least one alternative network. At block 1030, the wireless device may transmit the system selection data to the first network for use by the network device in response to the request.

At block 1035, the network device may receive the system selection data generated and transmitted by the wireless device. At block 1040, the network device may make an admission control decision based on the system selection data to determine whether to transition the wireless device to one of the alternative networks. The network device may determine that a price to a user of the wireless device associated with transitioning the wireless device to one or more of the alternative networks may surpass a threshold. Accordingly, at block 1045, the network device may allow the wireless device to remain on the first network.

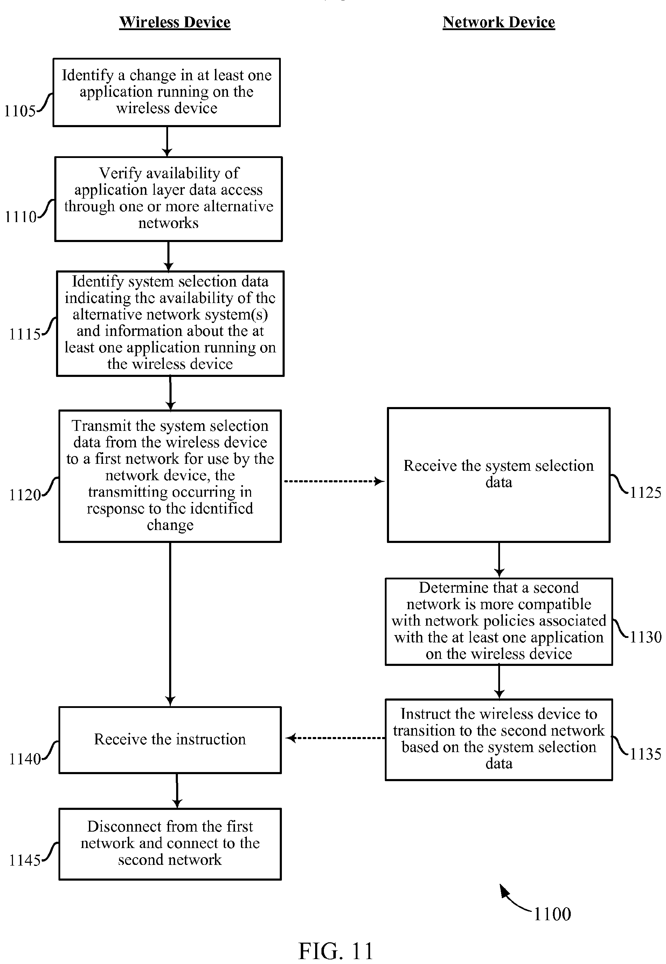

**FIG. 11** shows a flowchart of an example of a method 1100 of network directed system selection as implemented by a wireless device (e.g., wireless device 120) and a network device (e.g., system selection network device 105) according to the principles of the present disclosure. At block 1105, the wireless device may identify a change in at least one application running on the wireless device. This may trigger the wireless device at block 1110 to verify the availability of application layer data access through one or more alternative networks. The wireless device may then, at block 1115, identify system selection data. The system selection data may indicate information about the at least one application running on the wireless device and information about at least one of the alternative networks available to the wireless device. The information about the at least one application may include, for example, an application type of the at least one application, network policies associated with the at least one application, a tolerance of the at least one application to changes in IP address, and the like. At block 1120, the wireless device may transmit the system selection data to a first network for use by the network device in response to the trigger.

At block 1125, the network device may receive the system selection data generated and transmitted by the wireless device. At block 1130, the network device may make an admission control decision to determine whether to transition the wireless device to one of the alternative networks. The network device may determine, based on the network policies associated with the at least one application and the at least one application's tolerance to IP address changes, that a second network is more compatible with the policies of the at least one application. Accordingly, at block 1135, the network device may instruct the wireless device to disconnect from the first network and transition to the second network based on the system selection data. At block 1140, the wireless device may receive the instruction, and at block 1145, the wireless device may disconnect from the first network and connect to the second network.

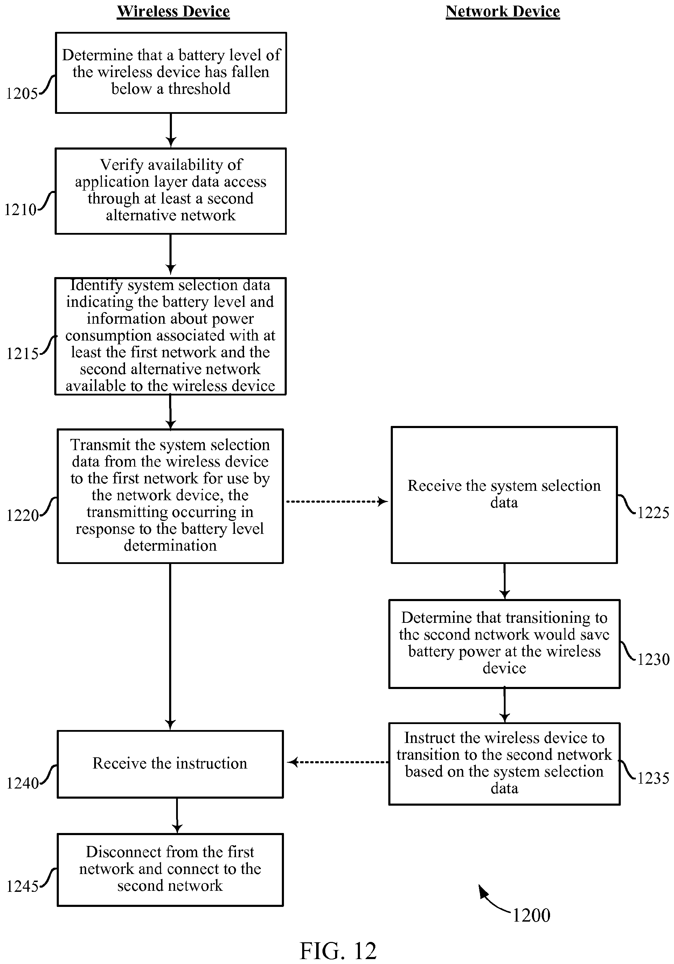

**FIG. 12** shows a flowchart of another example of a method 1200 of network directed system selection as implemented by a wireless device (e.g., wireless device 120) and a network device (e.g., system selection network device 105) according to the principles of the present disclosure. At block 1205, the wireless device may be connected to a first network and determine that a battery level of the wireless device has fallen below a threshold. This may trigger the wireless device at block 1210 to verify the availability of application layer data access through at least a second alternative network. The wireless device may then identify system selection data at block 1215. The system selection data may include, for example, information about the battery level of the wireless device, information about an estimated or measured power consumption associated with conducting data transactions on the first network and the second alternative network available to the wireless device. At block 1220, the wireless device may transmit the system selection data to the first network for use by the network device in response to the trigger.

At block 1225, the network device may receive the system selection data generated and transmitted by the wireless device. At block 1230, the network device may make an admission control decision based on the system selection data to determine whether to transition the wireless device to the alternative network. The network device may determine, based on the power consumption and battery level information in the system selection data, that the second alternative network would reduce the power consumption of the wireless device and prolong the battery life. Accordingly, at block 1235, the network device may instruct the wireless device to disconnect from the first network and transition to the second network based on the system selection data. At block 1240, the wireless device may receive the instruction, and at block 1245, the wireless device may disconnect from the first network and connect to the second network.

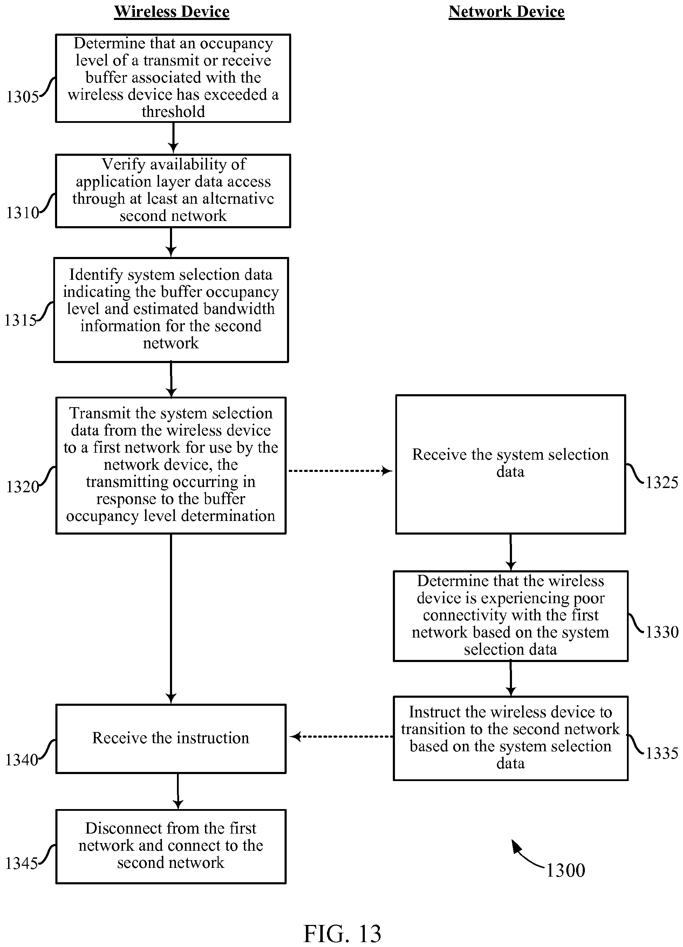

**FIG. 13** shows a flowchart of another example of a method 1300 of network directed system selection as implemented by a wireless device (e.g., wireless device 120) and a network device (e.g., system selection network device 105) according to the principles of the present disclosure. At block 1305, the wireless device may be connected to a first network and determine that an occupancy level of a transmit or receive buffer associated with the wireless device has exceeded a threshold. This may trigger the wireless device at block 1310 to verify the availability of application layer data access through at least an alternative second network. At block 1315, the wireless device may identify system selection data indicating that the second alternative network has application layer data access that has been verified as available to the wireless device. The system selection data may include, for example, information about occupancy level of the buffer(s) and estimated bandwidth and throughput information for at least a second alternative network available to the wireless device. At block 1320, the wireless device may transmit the system selection data to the first network for use by the network device in response to the trigger.

At block 1325, the network device may receive the system selection data generated and transmitted by the wireless device. At block 1330, the network device may make a decision based on the system selection data to determine whether to transition the wireless device to the alternative network. The network device may determine, based on the buffer occupancy level and characteristics of the alternative network, that the wireless device is experiencing poor connectivity with the first network, and that the second alternative network would provide better service to the wireless device. Accordingly, at block 1335, the network device may instruct the wireless device to disconnect from the first network and transition to the second alternative network based on the system selection data. At block 1340, the wireless device may receive the instruction, and at block 1345, the wireless device may disconnect from the first network and connect to the second network.

The detailed description set forth above in connection with the appended drawings describes exemplary embodiments and does not represent the only embodiments that may be implemented or that are within the scope of the claims. The term "exemplary" used throughout this description means "serving as an example, instance, or illustration," and not "preferred" or "advantageous over other embodiments." The detailed description includes specific details for the purpose of providing an understanding of the described techniques. These techniques, however, may be practiced without these specific details. In some instances, well-known structures and devices are shown in block diagram form in order to avoid obscuring the concepts of the described embodiments.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items prefaced by "at least one of' indicates a disjunctive list such that, for example, a list of "at least one of A, B, or C" means A or B or C or AB or AC or BC or ABC (i.e., A and B and C).

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and BLU-RAY disc where disks usually reproduce data magnetically, while discs reproduce data optically with lasers. Combinations of the above are also included within the scope of computer-readable media.

Techniques described herein may be used for various wireless communications systems such as cellular wireless systems, Peer-to-Peer wireless communications, wireless local access networks (WLANs), ad hoc networks, satellite communications systems, and other systems. The terms "system" and "network" are often used interchangeably. These wireless communications systems may employ a variety of radio communication technologies for multiple access in a wireless system such as Code Division Multiple Access (CDMA), Time Division Multiple Access (TDMA), Frequency Division Multiple Access (FDMA), Orthogonal FDMA (OFDMA), Single-Carrier FDMA (SC-FDMA), and/or other technologies. Generally, wireless communications are conducted according to a standardized implementation of one or more radio communication technologies called a Radio Access Technology (RAT). A wireless communications system or network that implements a Radio Access Technology may be called a Radio Access Network (RAN).

Examples of Radio Access Technologies employing CDMA techniques include CDMA2000, Universal Terrestrial Radio Access (UTRA), etc. CDMA2000 covers IS-2000, IS-95, and IS-856 standards. IS-2000 Releases 0 and A are commonly referred to as CDMA2000 IX, IX, etc. IS-856 (TIA-856) is commonly referred to as CDMA2000 1xEV-DO, High Rate Packet Data (HRPD), etc. UTRA includes Wideband CDMA (WCDMA) and other variants of CDMA. Examples of TDMA systems include various implementations of Global System for Mobile Communications (GSM). Examples of Radio Access Technologies employing FDMA and/or OFDMA include Ultra Mobile Broadband (UMB), Evolved UTRA (E-UTRA), IEEE 802.11 (Wi-Fi), IEEE 802.16 (WiMAX), IEEE 802.20, Flash-OFDM, etc. UTRA and E-UTRA are part of Universal Mobile Telecommunication System (UMTS). 3GPP Long Term Evolution (LTE) and LTE-Advanced (LTE-A) are new releases of UMTS that use E-UTRA. UTRA, E-UTRA, UMTS, LTE, LTE-A, and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies.

The previous description of the disclosure is provided to enable a person skilled in the art to make or use the disclosure. Various modifications to the disclosure will be readily apparent to those skilled in the art, and the generic principles defined herein may be applied to other variations without departing from the scope of the disclosure. Throughout this disclosure the term "example" or "exemplary" indicates an example or instance and does not imply or require any preference for the noted example. Thus, the disclosure is not to be limited to the examples and designs described herein but is to be accorded the widest scope consistent with the principles and novel features of the appended claims.

## Claims

1. A method (1000) of network directed system selection, comprising:
receiving (1015), at a wireless device, a request for system selection data, wherein the request for system selection data is transmitted by a network device;
identifying (1025) the system selection data at the wireless device for use by the network device in performing a network directed system selection decision for the wireless device, the system selection data comprising an indication of one or more networks through which the wireless device has verified that data access is available to the wireless device, wherein verifying comprises temporarily connecting to one or more of the one more networks and performing a ping or other network operations; and
transmitting (1030) the system selection data from the wireless device to a first network for use by the network device, the transmitting of the system selection data occurring in response to the request for the system selection data transmitted by the network device.

2. The method (1000) of claim 1, wherein the system selection decision comprises one or more of: an admission control decision, a decision whether to transition the wireless device from the first network to a second network, or a decision to transition data transactions of the wireless device from the first network to the second network while the wireless device remains connected to both the first and second networks.

3. The method (1000) of claim 1, further comprising:
connecting to a second network at the wireless device while the wireless device is concurrently connected to the first network; and
pinging a network resource over the second network to verify that data access is available to the wireless device while the wireless device is concurrently connected to the first network.

4. The method (1000) of claim 1, further comprising:
verifying (1020) that the data access is available to the wireless device based on a subscription associated with the wireless device.

5. The method (1000) of claim 1, wherein the data access comprises application layer data access.

6. The method (1000) of claim 1, further comprising:
transmitting to the first network at least one identifier associated with the wireless device for each of a plurality of networks available to the wireless device, the system selection data comprising the at least one identifier.

7. The method (1000) of claim 1, further comprising:
transmitting pricing information to the first network, the pricing information associated with transmitting data over at least one of the first network or a second network, the system selection data comprising the pricing information.

8. The method (1000) of claim 1, further comprising:
transmitting to the first network information about an application currently running on the wireless device, the system selection data comprising the information about the application, wherein the information about the application currently running on the wireless device preferably comprises one or more of: an indication of at least one network data policy associated with the application, an indication of at least one type associated with the application, an indication of at least one Quality of Service (QoS) requirement associated with the application, or an indication of a tolerance of the application to Internet Protocol (IP) address changes.

9. The method (1000) of claim 1, further comprising:
transmitting to the first network an indication of power consumption associated with conducting data transactions over at least one network; the system selection data comprising the indication of power consumption.

10. The method (1000) of claim 1, further comprising:
transmitting to the first network an indication of a battery level of the wireless device, the system selection data comprising the indication of the battery level.

11. The method (1000) of claim 1, further comprising:
transmitting to the first network a status of at least one transmit buffer associated with the wireless device, the system selection data comprising the status of the transmit buffer.

12. The method (1000) of claim 1, further comprising:
transmitting to the first network a status of at least one receive buffer associated with the wireless device, the system selection data comprising the status of the receive buffer.

13. The method (1000) of claim 1, further comprising:
detecting at the wireless device a change in the system selection data, the transmitting of the system selection data occurring in response to the detected change in the system selection data.

14. A wireless device apparatus (120-q), comprising:
means (545) for receiving, at the wireless device apparatus, a request for system selection data, wherein the request for system selection data is transmitted by a network device;
means (525) for identifying the system selection data at the wireless device apparatus for use by the network device in performing a network directed system selection decision for the wireless device, the system selection data comprising an indication of one or more networks through which the wireless device apparatus has verified that data access is available to the wireless device apparatus, wherein verifying comprises temporarily connecting to one or more of the one more networks and performing a ping or other network operations; and
means (550) for transmitting the system selection data from the wireless device apparatus to a first network for use by the network device, the transmitting of the system selection data occurring in response to the request for system selection data.

15. A computer program product, comprising:
a computer-readable storage device, the computer readable storage device comprising computer-readable program code stored thereon, which when executed by the computer causes the computer to perform the method of any one of claims 1 to 13.

## Patentansprüche

1. Verfahren (1000) für eine durch ein Netzwerk angeleitete Systemauswahl, welches Folgendes aufweist:
Empfangen (1015) bei einer Drahtlosvorrichtung einer Anfrage bezüglich Systemauswahldaten, wobei die Anfrage bezüglich Systemauswahldaten durch eine Netzwerkvorrichtung übertragen wird;
Identifizieren (1025) der Systemauswahldaten bei der Drahtlosvorrichtung zur Verwendung durch die Netzwerkvorrichtung beim Ausführen einer durch ein Netzwerk angeleiteten Systemauswahlentscheidung für die Drahtlosvorrichtung, wobei die Systemauswahldaten eine Anzeige von einem oder mehreren Netzwerken aufweisen, durch welche die Drahtlosvorrichtung überprüft hat, dass ein Datenzugriff für die Drahtlosvorrichtung verfügbar ist, wobei das Überprüfen aufweist, temporär eine Verbindung mit einem oder mehreren des einen oder der mehreren Netzwerke herzustellen, und eine Ping-Operation oder andere Netzwerkoperationen auszuführen; und
Übertragen (1030) der Systemauswahldaten von der Drahtlosvorrichtung an ein erstes Netzwerk zur Verwendung durch die Netzwerkvorrichtung, wobei die Übertragung der Systemauswahldaten ansprechend auf die Anfrage bezüglich der Systemauswahldaten auftritt, welche durch die Netzwerkvorrichtung übertragen wurde.

2. Verfahren (1000) nach Anspruch 1, wobei die Systemauswahlentscheidung eines oder mehrere von Folgendem aufweist: eine Zugangssteuerentscheidung, eine Entscheidung, ob die Drahtlosvorrichtung von dem ersten Netzwerk auf ein zweites Netzwerk übergehen soll, oder eine Entscheidung, dass Datentransaktionen der Drahtlosvorrichtung von dem ersten Netzwerk auf das zweite Netzwerk übergehen sollen, während die Drahtlosvorrichtung mit sowohl dem ersten als auch dem zweiten Netzwerk verbunden bleibt.

3. Verfahren (1000) nach Anspruch 1, welches weiter Folgendes aufweist:
Verbinden mit einem zweiten Netzwerk bei der Drahtlosvorrichtung, während die Drahtlosvorrichtung gleichzeitig mit dem ersten Netzwerk verbunden ist; und
Senden eines Pings an eine Netzwerkressource über das zweite Netzwerk, um zu überprüfen, ob ein Datenzugriff für die Drahtlosvorrichtung verfügbar ist, während die Drahtlosvorrichtung gleichzeitig mit dem ersten Netzwerk verbunden ist.

4. Verfahren (1000) nach Anspruch 1, welches weiter Folgendes aufweist: Überprüfen (1020), ob der Datenzugriff für die Drahtlosvorrichtung verfügbar ist, und zwar basierend auf einer Registrierung bzw. Eintragung, die mit der Drahtlosvorrichtung assoziiert ist.

5. Verfahren (1000) nach Anspruch 1, wobei der Datenzugriff einen Anwendungsschichtdatenzugriff aufweist.

6. Verfahren (1000) nach Anspruch 1, welches weiter Folgendes aufweist: Übertragen mindestens eines Identifikators an das erste Netzwerk, welcher mit der Drahtlosvorrichtung assoziiert ist, und zwar für jedes von einer Vielzahl von Netzwerken, die für die Drahtlosvorrichtung verfügbar sind, wobei die Systemauswahldaten den mindestens einen Identifikator aufweisen.

7. Verfahren (1000) nach Anspruch 1, welches weiter Folgendes aufweist: Übertragen einer Preisinformation an das erste Netzwerk, wobei die Preisinformation mit der Übertragung von Daten über das erste Netzwerk und/oder ein zweites Netzwerk assoziiert ist, wobei die Systemauswahldaten die Preisinformation aufweisen.

8. Verfahren (1000) nach Anspruch 1, welches weiter Folgendes aufweist: Übertragen von Information über eine Anwendung, die gegenwärtig auf der Drahtlosvorrichtung läuft, an die erste Netzwerkinformation, wobei die Systemauswahldaten die Information über die Anwendung aufweisen, wobei die Information über die Anwendung, die gegenwärtig auf der Drahtlosvorrichtung läuft, vorzugsweise eine oder mehrere der Folgenden aufweist:
eine Anzeige von mindestens einer Netzwerkdatenrichtlinie, die mit der Anwendung assoziiert ist, eine Anzeige von mindestens einem Typ, der mit der Anwendung assoziiert ist, eine Anzeige von mindestens einer QoS-Anforderung (QoS = Quality of Service = Dienstqualität), die mit der Anwendung assoziiert ist, oder eine Anzeige einer Toleranz der Anwendung bezüglich Internet-Protokoll bzw. IP-Adressänderungen.

9. Verfahren (1000) nach Anspruch 1, welches weiter Folgendes aufweist: Übertragen einer Anzeige eines Leistungsverbrauchs, der mit dem Leiten von Datentransaktionen über mindestens ein Netzwerk assoziiert ist, an das erste Netzwerk; wobei die Systemauswahldaten die Anzeige des Leistungsverbrauchs aufweisen.

10. Verfahren (1000) nach Anspruch 1, welches weiter Folgendes aufweist: Übertragen eines Batterieniveaus der Drahtlosvorrichtung an das erste Netzwerk, wobei die Systemauswahldaten die Anzeige des Batterieniveaus aufweisen.

11. Verfahren (1000) nach Anspruch 1, welches weiter Folgendes aufweist: Übertragen eines Status von mindestens einem Sendepuffer, der mit der Drahtlosvorrichtung assoziiert ist, an das erste Netzwerk, wobei die Systemauswahldaten den Status des Sendepuffers aufweisen.

12. Verfahren (1000) nach Anspruch 1, welches weiter Folgendes aufweist: Übertragen eines Status von mindestens einem Empfangspuffer, der mit der Drahtlosvorrichtung assoziiert ist, an das erste Netzwerk, wobei die Systemauswahldaten den Status des Empfangspuffers aufweisen.

13. Verfahren (1000) nach Anspruch 1, welches weiter Folgendes aufweist: Detektieren einer Veränderung in den Systemauswahldaten bei der Drahtlosvorrichtung, wobei das Übertragen der Systemauswahldaten ansprechend auf die detektierte Änderung in den Systemauswahldaten auftritt.

14. Drahtlosvorrichtung (120-q), die Folgendes aufweist:
Mittel (545) zum Empfangen bei einer Drahtlosvorrichtung einer Anfrage bezüglich Systemauswahldaten, wobei die Anfrage bezüglich Systemauswahldaten durch eine Netzwerkvorrichtung übertragen wird;
Mittel (525) zum Identifizieren der Systemauswahldaten bei der Drahtlos-Vorrichtung zur Verwendung durch die Netzwerkvorrichtung beim Ausführen einer durch ein Netzwerk angeleiteten Systemauswahlentscheidung für die Drahtlosvorrichtung, wobei die Systemauswahldaten eine Anzeige von einem oder mehreren Netzwerken aufweisen, durch welche die Drahtlosvorrichtung überprüft hat, dass ein Datenzugriff für die Drahtlosvorrichtung verfügbar ist, wobei das Überprüfen aufweist, temporär eine Verbindung mit einem oder mehreren des einen oder der mehreren Netzwerke herzustellen und eine Ping-Operation oder andere Netzwerkoperationen auszuführen; und
Mittel (550) zum Übertragen der Systemauswahldaten von der Drahtlosvorrichtung an ein erstes Netzwerk zur Verwendung durch die Netzwerkvorrichtung, wobei die Übertragung der Systemauswahldaten ansprechend auf die Anfrage bezüglich der Systemauswahldaten auftritt.

15. Computerprogrammprodukt, welches Folgendes aufweist:
eine computerlesbare Speichervorrichtung, wobei die computerlesbare Speichervorrichtung darauf einen gespeicherten computerlesbaren Programmcode aufweist, der, wenn er durch den Computer ausgeführt wird, den Computer veranlasst, das Verfahren nach einem der Ansprüche 1 bis 13 auszuführen.

## Revendications

1. Procédé (1000) de sélection de système dirigé par réseau, comprenant les étapes suivantes :
la réception (1015), au niveau d'un dispositif sans fil, d'une requête de données de sélection de système, dans lequel la requête de données de sélection de système est transmise par un dispositif réseau ;
l'identification (1025) de données de sélection de système au niveau du dispositif sans fil à utiliser par le dispositif réseau dans l'exécution d'une décision de sélection de système dirigé par le réseau pour le dispositif sans fil, les données de sélection de système comprenant une indication d'un ou de plusieurs réseaux via lesquels le dispositif sans fil a vérifié que l'accès aux données est disponible pour le dispositif sans fil, dans lequel la vérification comprend une connexion temporaire à un ou plusieurs parmi lesdits un ou plusieurs réseaux et la mise en oeuvre d'une requête ping ou d'autres opérations réseau ; et
la transmission (1030) des données de sélection de système du dispositif sans fil à un premier réseau à utiliser par le dispositif réseau, la transmission des données de sélection de système se produisant en réponse à la requête des données de sélection de système transmise par le dispositif réseau.

2. Procédé (1000) selon la revendication 1, dans lequel la décision de sélection de système comprend un ou plusieurs parmi : une décision de contrôle d'admission, une décision relative au passage ou non du dispositif sans fil du premier réseau à un deuxième réseau, ou une décision de passage de transactions de données du dispositif sans fil du premier réseau au deuxième réseau, tandis que le dispositif sans fil reste connecté aux premier et deuxième réseaux.

3. Procédé (1000) selon la revendication 1, comprenant en outre les étapes suivantes :
la connexion à un deuxième réseau au niveau du dispositif sans fil alors que le dispositif sans fil est connecté simultanément au premier réseau ; et
l'envoi d'une requête ping à une ressource réseau sur le deuxième réseau pour vérifier que l'accès des données est disponible au dispositif sans fil alors que le dispositif sans fil est connecté simultanément au premier réseau.

4. Procédé (1000) selon la revendication 1, comprenant en outre :
la vérification (1020) que l'accès aux données est disponible pour le dispositif sans fil sur la base d'un abonnement associé au dispositif sans fil.

5. Procédé (1000) selon la revendication 1, dans lequel l'accès aux données comprend un accès aux données de la couche d'application.

6. Procédé (1000) selon la revendication 1, comprenant en outre :
la transmission au premier réseau d'au moins un identifiant associé au dispositif sans fil pour chacun parmi une pluralité de réseaux disponibles pour le dispositif sans fil, les données de sélection de système comprenant ledit au moins un identifiant.

7. Procédé (1000) selon la revendication 1, comprenant en outre :
la transmission d'informations de tarification au premier réseau, les informations de tarification associées à la transmission de données sur au moins l'un parmi le premier réseau ou le deuxième réseau, les données de sélection de système comprenant les informations de tarification.

8. Procédé (1000) selon la revendication 1, comprenant en outre :
la transmission au premier réseau d'informations concernant une application en cours d'exécution sur le dispositif sans fil, les données de sélection de système comprenant les informations concernant l'application, dans lequel les informations concernant l'application en cours d'exécution sur le dispositif sans fil comprennent de préférence une ou plusieurs parmi : une indication d'au moins une politique de données de réseau associée à l'application, une indication d'au moins un type associé à l'application, une indication d'au moins une contrainte de qualité de service (QoS) associée à l'application, ou une indication d'une tolérance de l'application aux changements d'adresse de protocole Internet (IP).

9. Procédé (1000) selon la revendication 1, comprenant en outre :
la transmission au premier réseau d'une indication de consommation d'énergie associée à la réalisation de transactions de données sur au moins un réseau ; les données de sélection de système comprenant l'indication de consommation d'énergie.

10. Procédé (1000) selon la revendication 1, comprenant en outre :
la transmission au premier réseau d'une indication d'un niveau de batterie du dispositif sans fil, les données de sélection de système comprenant l'indication du niveau de batterie.

11. Procédé (1000) selon la revendication 1, comprenant en outre :
la transmission au premier réseau d'une indication d'un état d'au moins un tampon de transmission associé au dispositif sans fil, les données de sélection de système comprenant l'état du tampon de transmission.

12. Procédé (1000) selon la revendication 1, comprenant en outre :
la transmission au premier réseau d'un état d'au moins un tampon de réception associé au dispositif sans fil, les données de sélection de système comprenant l'état du tampon de réception.

13. Procédé (1000) selon la revendication 1, comprenant en outre :
la détection au niveau du dispositif sans fil d'un changement dans les données de sélection de système, la transmission des données de sélection de système survenant en réponse au changement détecté dans les données de sélection de système.

14. Appareil à dispositif sans fil (120-q), comprenant :
des moyens (545) pour recevoir, au niveau d'un appareil à dispositif sans fil, une requête de données de sélection de système, dans lequel la requête de données de sélection de système est transmise par un dispositif réseau ;
des moyens (525) pour identifier les données de sélection de système au niveau de l'appareil à dispositif sans fil à utiliser par le dispositif réseau dans l'exécution d'une décision de sélection de système dirigé par le réseau pour le dispositif sans fil, les données de sélection de système comprenant une indication d'un ou de plusieurs réseaux via lesquels l'appareil à dispositif sans fil a vérifié que l'accès aux données est disponible pour l'appareil à dispositif sans fil, dans lequel la vérification comprend la connexion temporaire à un ou plusieurs parmi lesdits un ou plusieurs réseaux et la mise en oeuvre d'une requête ping ou d'autres opérations réseau ; et
des moyens (550) pour transmettre les données de sélection de système de l'appareil à dispositif sans fil à un premier réseau à utiliser par le dispositif réseau, la transmission des données de sélection de système survenant en réponse à la requête des données de sélection de système.

15. Produit programme d'ordinateur, comprenant :
un dispositif de stockage lisible par ordinateur, le dispositif de stockage lisible par ordinateur comprenant un code de programme lisible par ordinateur stocké sur celui-ci, qui, quand il est exécuté par l'ordinateur force l'ordinateur à mettre en oeuvre le procédé selon l'une quelconque des revendications 1 à 13.
